(19) Europäisches Patentamt
European Patent Office
Office européen des brevets

(11) EP 0 504 061 B1

(12) **FASCICULE DE BREVET EUROPEEN**

(45) Date de publication et mention
de la délivrance du brevet:
**19.06.1996 Bulletin 1996/25**

(51) Int Cl.⁶: **H04L 1/24**

(21) Numéro de dépôt: **92400660.4**

(22) Date de dépôt: **12.03.1992**

(54) **Procédés de test pour transmissions série bidirectionnelles et circuits pour leur mise en oeuvre**

Verfahren und Schaltungsanordnung zur Prüfung zweiseitiger, serialer Übertragungen

Method and circuit for testing serial bidirectional transmissions

(84) Etats contractants désignés:
**CH DE ES FR GB LI NL**

(30) Priorité: **14.03.1991 FR 9103126**

(43) Date de publication de la demande:
**16.09.1992 Bulletin 1992/38**

(73) Titulaire: **BULL S.A.**
**F-78430 Louveciennes (FR)**

(72) Inventeur: **Marbot, Roland**
**F-75116 Paris (FR)**

(74) Mandataire: **Colombe, Michel et al**
**Direction de la Propriété Intellectuelle BULL SA**
**Poste courrier:LV 59C18**
**68 route de Versailles**
**78430 Louveciennes (FR)**

(56) Documents cités:
**EP-A- 0 009 592**      **EP-A- 0 014 505**
**EP-A- 0 026 931**      **EP-A- 0 067 310**

## Description

L'invention concerne les transmissions de données numériques entre stations ou unités par l'intermédiaire de liaisons série bidirectionnelles de type point à point. Ces liaisons comportent un support de transmission, tel que paires torsadées, câbles coaxiaux ou fibres optiques, relié à chaque extrémité à une station par un émetteur et un récepteur associé à la station.

Pour de nombreuses applications, on préfère utiliser un mode de transmission permettant un fonctionnement simultané dans les deux sens entre les deux points afin d'obtenir une meilleure utilisation des lignes.

En particulier, cette solution sera adaptée pour réaliser l'interconnexion entre les unités d'un sous-système central informatique comportant un grand nombre d'unités. En effet, la tendance actuelle étant d'augmenter considérablement le nombre de processeurs et de mémoires, le choix d'un bus pour effectuer les échanges d'informations entre toutes ces unités n'est plus adapté. Il est préférable dans ce contexte d'utiliser des liaisons série reliant chaque unité à toutes les autres unités du système de façon à augmenter le parallélisme. Compte tenu du grand nombre de liaisons impliquées dans un tel système, le choix de liaisons bidirectionnelles est préférable.

De façon générale, une transmission bidirectionnelle nécessite au niveau de chaque station la présence d'un émetteur-récepteur relié aux lignes par une impédance d'adaptation. Il faut en outre prévoir dans la partie réceptrice des moyens permettant de traiter les collisions, c'est-à-dire les cas où les émetteurs des deux stations reliées entre elles émettent simultanément sur la liaison commune. Ces moyens doivent permettre en toute circonstance de détecter à partir de l'état électrique de la ligne l'existence et la nature des signaux émis par la station éloignée.

Pour résoudre ce problème, on utilise habituellement le principe d'une compensation dans le récepteur de l'effet produit sur la ligne par l'émetteur de la même station lorsque celui-ci émet. Ceci revient à effectuer en cas d'émission une soustraction du signal d'émission au signal présent sur la ligne. La différence obtenue est alors représentative du signal émis par l'émetteur de la station éloignée. Une telle solution est décrite dans la demande de brevet européen EP-A-0 186 142 intitulée "Two wire bidirectional digital transmission system".

Une autre solution consiste non pas à soustraire du signal de ligne le signal d'émission lorsque l'émetteur de la station considérée émet mais au contraire à additionner, lorsque la station n'émet pas, le signal de ligne à un signal de compensation de même polarité convenablement choisi pour que la somme en résultant soit représentative du signal d'émission de l'autre station.

Le document EP-A-0026931 propose, pour un émetteur-récepteur transmettant de façon bidirectionnelle des signaux digitaux sur une ligne unique, de connecter des impédances d'adaptation entre la ligne et l'émetteur-recepteur, à l'extérieur du circuit intégré où est implanté l'émetteur-récepteur. A haute fréquence, les liaisons entre la ligne, les impédances et l'émetteur-récepteur nécessitent un soin particulier.

Le document EP-A-0014505 propose un système de test pour émetteur-récepteur. Cependant, ce système s'appliquant à un domaine différent, celui des couplages à la ligne de transmission par jonction hybride et annuleur d'écho, il ne prévoit pas de tester les liaisons entre la ligne, les impédances et l'émetteur-récepteur.

La recherche de performance améliorée conduit à faire fonctionner ces émetteurs-récepteurs à la fréquence la plus élevée possible. En technologie BiCMOS, on peut atteindre un débit de l'ordre de 1 Gbit/s, ce qui implique un fonctionnement dans le domaine des hyperfréquences. Or un fonctionnement dans cette gamme de fréquences entraîne de nombreuses difficultés de réalisation au niveau des connexions et des liaisons. En particulier, dans le cas d'une réalisation sous forme de circuits intégrés, les liaisons entre les lignes et le circuit intégré nécessitent un soin tout particulier et restent très sensibles aux perturbations extérieures.

Dans ce contexte, les opérations de test, telles qu'on les effectue jusqu'à présent, présentent des difficultés importantes. En effet, pour tester un émetteur-récepteur, on utilise généralement un appareil de test relié aux bornes d'émission et de réception par des pointes de test et on commande le testeur pour qu'il provoque l'envoi de signaux d'émission et compare ces signaux à ceux présents sur les bornes de sortie de l'émetteur-récepteur, ou, si ce dernier est relié à une ligne, aux signaux présents à l'extrémité de la ligne. Si l'émetteur-récepteur fait partie d'un circuit d'interfaces parallèle-série, série-parallèle, le branchement du testeur sur les entrées-sorties parallèles ne pose pas de grandes difficultés car les signaux échangés sont à basse fréquence. Par contre, la mesure des signaux série en sortie de l'émetteur-récepteur entraîne des perturbations qui risquent de fausser le test.

Aussi, l'invention a pour but de résoudre ce problème en proposant un procédé de test applicable aux émetteurs-récepteurs prévus pour fonctionner à très haute fréquence. Bien entendu, ce procédé pourrait a fortiori s'appliquer pour des fonctionnements à fréquence plus basse.

En analysant plus en détail la constitution et le fonctionnement des émetteurs-récepteurs pour liaison bidirectionnelle, on constate qu'ils comportent un amplificateur d'émission pour produire, en cas d'émission, un courant de ligne de polarité et de valeur données se propageant de la station considérée vers la station éloignée. La partie réception effectue la mesure de ce courant de ligne qui correspond en fait à la tension aux bornes de l'impédance d'adaptation reliée à la ligne. Comme nous l'avons exposé précédemment, le récepteur comprend des moyens d'amplification et de compensation pour tenir compte des cas de collision. Lorsqu'aucune station n'émet, le courant de ligne est nul, ainsi que la tension aux bornes de l'impédance d'adaptation. Si la station éloignée est seule à émettre, cela se traduit par la présence d'un courant de ligne de polarité et de valeur données qui se mesure par un niveau de tension correspondant aux bornes de l'impédance d'adaptation. Lorsque la station considérée émet, elle produit un courant de ligne ainsi qu'une variation de tension dans l'impédance d'adaptation qui peut éventuellement se superposer à la variation de tension due au courant produit par l'autre station venant juste d'émettre. Aussi, les moyens de compensation sont normalement conçus pour soustraire à la valeur représentative du courant dans l'impédance d'adaptation, une valeur représentative du courant circulant dans cette impédance lorsque la station considérée est seule à émettre.

En pratique, la valeur du courant produit par une émission est voisine de celle du courant dû à une émission de la station éloignée. Ceci est toujours le cas lorsqu'on utilise des lignes ayant de faibles pertes. Il en résulte que le courant de compensation est voisin de la moitié du courant circulant dans l'impédance d'adaptation dans le cas d'une collision. Par conséquent, si on déconnecte soit la ligne, soit l'impédance d'adaptation et si on commande une émission, le récepteur doit mesurer le même niveau de signal que si un signal d'émission était reçu en fonctionnement normal. Dans ce cas, le récepteur doit fournir un signal de réception pratiquement identique au signal d'émission. Cette propriété permet donc d'effectuer des tests pour vérifier l'intégrité à la fois de l'émetteur et du récepteur, sans qu'il soit nécessaire de mesurer directement les signaux aux bornes de l'impédance ou de la ligne.

Selon une première possibilité, on peut tester l'émetteur-récepteur après fabrication, avant de le connecter aux lignes de transmission. Dans ce but, l'invention a pour objet un procédé de test d'un émetteur-récepteur prévu pour être relié par une liaison de transmission bidirectionnelle à un autre émetteur-récepteur analogue, ladite liaison étant constituée par au moins une ligne de transmission, ledit émetteur-récepteur comportant pour chaque ligne une borne d'entrée-sortie prévue pour être reliée à une extrémité de ladite ligne, une impédance d'adaptation connectée à celle-ci et des moyens d'amplification pour produire des signaux d'émission sur ladite borne en réponse à des signaux de commande d'émission et pour produire des signaux de réception en réponse aux signaux d'émission produits sur ladite borne par l'autre émetteur-récepteur, ledit procédé étant caractérisé en ce que, ladite impédance d'adaptation étant branchée entre ladite borne et un potentiel fixe et ledit émetteur-récepteur n'étant pas relié à ladite liaison de transmission bidirectionnelle, il consiste à produire des signaux de commande d'émission et à les comparer aux signaux de réception fournis par lesdits moyens d'amplification.

On peut également effectuer des tests alors que l'émetteur-récepteur est relié aux lignes. Dans ce but, l'invention concerne un procédé de test d'un émetteur-récepteur relié par une liaison de transmission bidirectionnelle à un autre émetteur-récepteur analogue, ladite liaison étant constituée par au moins une ligne de transmission, ledit émetteur-récepteur comportant pour chaque ligne une borne d'entrée-sortie reliée à une extrémité de ladite ligne, une impédance d'adaptation connectée à celle-ci et des moyens d'amplification pour produire des signaux d'émission sur ladite borne en réponse à des signaux de commande d'émission et pour produire des signaux de réception en réponse aux signaux d'émission produits sur ladite borne par l'autre émetteur-récepteur, ledit procédé étant caractérisé en ce qu'il consiste à déconnecter dans ledit émetteur-récepteur l'impédance d'adaptation de la borne entre laquelle et un potentiel fixe elle était initialement branchée, à produire des signaux de commande d'émission et à les comparer aux signaux de réception fournis par lesdits moyens d'amplification.

Le résultat de ce test donne une indication supplémentaire sur l'intégrité des connexions et des liaisons entre l'émetteur-récepteur et la ligne.

Profitant toujours des propriétés des amplificateurs bidirectionnels et selon une autre possibilité, on exploite le fait qu'une ligne ouverte à une extrémité simule, par le phénomène de réflexion ayant lieu à son extrémité ouverte, une émission de la station éloignée. Ainsi, l'invention concerne également un procédé de test d'un émetteur-récepteur relié par une liaison de transmission bidirectionnelle à un autre émetteur-récepteur analogue, ladite liaison étant constituée par au moins une ligne de transmission, ledit émetteur-récepteur comportant pour chaque ligne une borne d'entrée-sortie reliée à une extrémité de ladite ligne, une impédance d'adaptation connectée à celle-ci et des moyens d'amplification pour produire des signaux d'émission sur ladite borne en réponse à des signaux de commande d'émission et pour produire des signaux de réception en réponse aux signaux d'émission produits sur ladite borne par l'autre émetteur-récepteur, ledit procédé étant caractérisé en ce qu'il consiste à déconnecter dans ledit autre émetteur-récepteur l'impédance d'adaptation de la borne entre laquelle et un potentiel fixe elle était initialement branchée, à produire des signaux de commande d'émission et à les comparer aux signaux de réception fournis par lesdits moyens d'amplification.

Ce test permet de vérifier en outre l'état de la ligne et des connexions entre la ligne et la station éloignée. De plus, il permet un contrôle de la sensibilité du récepteur, en tenant compte d'une atténuation potentielle des signaux le long de la ligne et dans les circuits d'extrémité des deux stations.

L'invention a aussi pour objet les procédés de test précédents appliqués à un circuit d'interface parallèle-série et série-parallèle utilisant des émetteurs-récepteurs bidirectionnels. Dans ce cas, les signaux de commande d'émission sont générés automatiquement par le circuit en réponse à des signaux d'émission de données parallèles. D'autre part, on compare ces signaux à ceux présents sur les sorties parallèles, ce qui permet un test en basse fréquence donnant une indication sur l'intégrité de l'ensemble du circuit d'interface.

L'invention concerne également un circuit comprenant au moins un émetteur-récepteur bidirectionnel et spécialement conçu pour la mise en oeuvre des procédés de test définis précédemment. Dans un tel circuit, l'émetteur-récepteur est relié par une liaison de transmission bidirectionnelle à un autre émetteur-récepteur analogue, ladite liaison étant constituée par au moins une ligne de transmission, ledit émetteur-récepteur comportant pour chaque ligne une borne d'entrée-sortie reliée à une extrémité de ladite ligne, une impédance d'adaptation connectée à celle-ci et des moyens d'amplification pour produire des signaux d'émission sur ladite borne en réponse à des signaux de commande d'émission et pour produire des signaux de réception en réponse aux signaux d'émission produits sur ladite borne par l'autre émetteur-récepteur. Plus précisément, ce circuit est caractérisé en ce que chaque impédance d'adaptation est conçue de façon à pouvoir prendre une valeur infinie sous la commande d'un signal de test pour pouvoir effectuer ladite déconnexion des impédances d'adaptation.

Enfin, dans le cas particulier d'un circuit d'interface parallèle-série, série-parallèle, il comporte des moyens de sérialisation-désérialisation ayant des entrées et sorties parallèles et des entrées et sorties série reliées à au moins un émetteur-récepteur, chacun desdits émetteurs-récepteurs étant prévus pour être reliés par une liaison de transmission bidirectionnelle à un autre émetteur-récepteur analogue, ladite liaison étant constituée par au moins une ligne de transmission, ledit émetteur-récepteur comportant pour chaque ligne une borne d'entrée-sortie prévue pour être reliée à une extrémité de ladite ligne, une impédance d'adaptation connectée à celle-ci et des moyens d'amplification pour produire des signaux d'émission sur ladite borne en réponse à des signaux de commande d'émission fournis à partir desdits moyens de sérialisation-désérialisation et pour produire des signaux de réception destinés auxdits moyens de sérialisation-désérialiation en réponse aux signaux d'émission produits sur ladite borne par l'autre émetteur-récepteur. Ce circuit est caractérisé en ce qu'il comporte un générateur de signaux de test relié auxdites entrées parallèles, des moyens pour comparer lesdits signaux de test aux signaux présents sur lesdites sorties parallèles et des moyens pour mémoriser les résultats des comparaisons effectuées par lesdits moyens de comparaison.

D'autres aspects, détails de réalisation et avantages de l'invention seront exposés dans la description qui va suivre.

- La figure 1 représente un amplificateur bidirectionnel pouvant faire partie d'un circuit intégré selon l'invention.

- La figure 2 représente des premiers moyens d'asservissement associés à l'amplificateur bidirectionnel.

- La figure 3 représente un amplificateur bidirectionnel de type différentiel.

- La figure 4 représente une réalisation des premiers moyens d'asservissement.

- La figure 5 représente la partie réception de l'émetteur-récepteur.

- La figure 6 représente des moyens d'asservissement des impédances réglables.

- La figure 7 représente un mode de réalisation d'une impédance réglable.

- La figure 8 représente des circuits permettant de réaliser les moyens d'asservissement des impédances réglables.

- La figure 9 représente un circuit d'interfaces parallèle-série, série-parallèle pouvant faire partie d'un circuit intégré selon l'invention et utilisable pour réaliser l'interconnexion entre les unités d'un système informatique.

- Les figures 10, 11 et 12 illustrent les procédés de test applicables aux circuits intégrés selon l'invention.

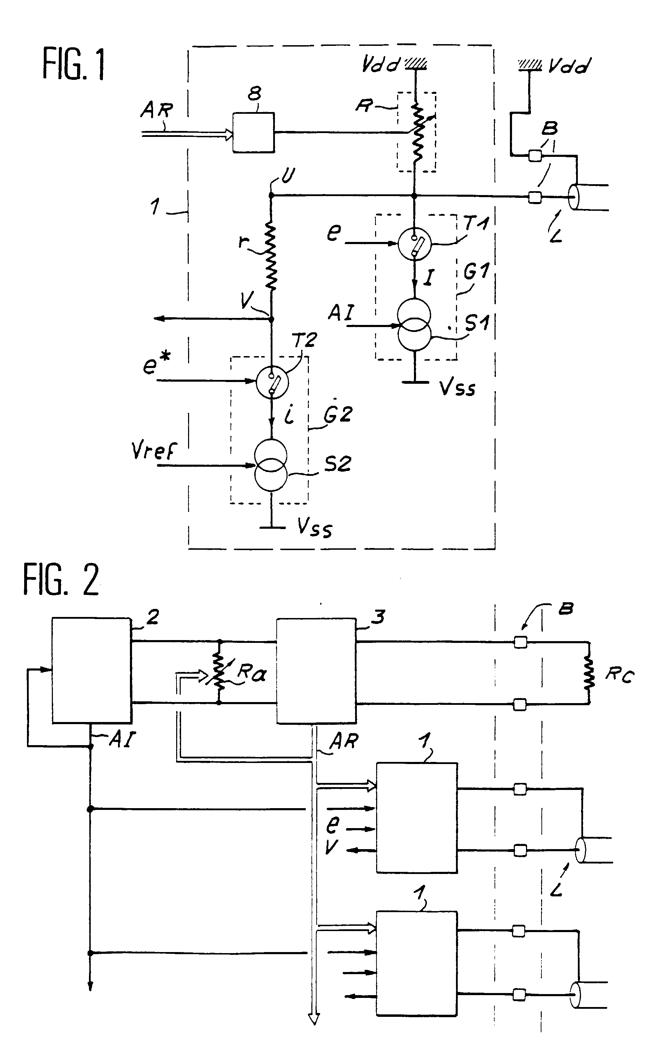

L'amplificateur 1 dans la figure 1 comprend une impédance d'adaptation R reliée à la ligne L par des bornes B ainsi qu'un premier générateur de courant G1 commandé par un signal de commande d'émission e. Le générateur G1 est branché en parallèle avec un montage comportant une seconde impédance r branchée en série avec un second générateur de courant G2 de même polarité que le générateur G1 et commandé par le signal e* complément de e. La borne V de l'impédance r qui est reliée au générateur de courant G2 constitue la borne de réception dont la tension est représentative du signal émis par l'autre station reliée à l'autre extrémité de la ligne L. L'autre borne U de l'impédance r est reliée au point commun à l'impédance R, au générateur G1 et à la ligne L. L'autre borne de l'impédance R est reliée à un potentiel fixe Vdd supposé être la masse du circuit. Dans le cas où la ligne est un câble coaxial, comme représenté, le blindage du câble est relié à la masse.

Le premier générateur de courant G1 est constitué d'une première source de courant S1 fournissant un courant I d'intensité variable en fonction d'un signal de réglage AI. La source de courant S1 est reliée à l'impédance R par l'intermédiaire d'un interrupteur T1 commandé par le signal e.

De façon analogue, le second générateur G2 comporte une seconde source de courant S2 fournissant un courant i réglé en fonction d'une tension de référence Vref et reliée à l'impédance r par l'intermédiaire d'un second interrupteur T2 commandé par le signal e*.

Les sources de courant S1, S2 sont alimentées par un second potentiel fixe Vss négatif par rapport à la masse. L'impédance R est supposée variable en fonction de signaux de réglage AR par l'intermédiaire d'un décodeur 8.

Pour simplifier les explications du principe de fonctionnement de l'amplificateur bidirectionnel, nous supposerons tout d'abord que la ligne L est sans perte, que i est négligeable par rapport à I et que la valeur de l'impédance R est très petite par rapport à celle de r. D'autre part, nous supposerons qu'un amplificateur bidirectionnel de même constitution d'une station éloignée est connecté à l'autre extrémité de la ligne L. Enfin, nous supposerons que l'état d'émission d'une station se traduit par la mise à 1 logique du signal de commande d'émission e qui, dans ce cas, provoque la fermeture de l'interrupteur T1 et l'ouverture de l'interrupteur T2.

En fonctionnement, quatre situations peuvent se présenter:

a) La station considérée est seule à émettre. Le générateur G2 est alors inactif tandis que le générateur G1 fournit un courant I à l'impédance R en parallèle avec l'impédance caractéristique de la ligne L. L'impédance R étant supposée adaptée à la ligne, un courant I/2 circule dans cette impédance et la tension présente à la borne U ainsi qu'à la borne V est égale à - R.I/2.

b) Si aucune station n'émet, le générateur G1 de chaque station est inactif, les générateurs G2 sont actifs. La tension à la borne V est alors pratiquement égale à - r.i.

c) Si les deux stations émettent, les générateurs G2 sont inactifs et le courant I produit par le premier générateur G1 de la station et celui de la station éloignée se superposent dans les impédances R et dans la ligne. En supposant un fonctionnement linéaire, la tension présente à la borne U ainsi qu'à la borne V est donc égale à - R.I.

d) Si la station éloignée est seule à émettre, un courant I/2 circule dans l'impédance R et la tension présente à la borne U est égale à - R.I/2. D'autre part, le courant i circule dans l'impédance r et la tension à la borne V est donc égale à - r.i - R.I/2.

Le but étant d'obtenir un signal ne dépendant que de l'état d'émission de la station éloignée, on constate que si l'on choisit les valeurs des impédances r et R et des courants i et I telles que l'on ait la relation : r.i = R.I/2, la tension de la borne de réception V vérifie bien cette condition. Cette tension sera donc égale à - R.I lorsque la station éloignée émet et à -R.I/2 lorsqu'elle n'émet pas.

Il convient cependant de remarquer que la relation r.i = R.I/2 permet d'obtenir des niveaux de tension sur la borne V strictement indépendants de l'état d'émission de la station à condition que les hypothèses initiales soient parfaitement vérifiées. Dans le cas contraire, la tension à la borne de réception V dépendrait de l'état d'émission mais la compensation imparfaite qui en résulterait pourrait, dans certaines conditions, permettre tout de même de détecter l'émission de la station éloignée en comparant la tension de réception à des valeurs de seuil bien choisies.

Un calcul plus précis permettrait d'établir une relation entre R, I, r, i pour réaliser exactement la compensation dans le cas réel. Cette relation doit exprimer la condition que la chute de tension dans les impédances R et r en série observée lorsque l'émetteur considéré est seul à émettre est égale à celle observée quand aucun émetteur n'émet. Cette condition est rigoureuse en fonctionnement linéaire et reste valable sans qu'il soit nécessaire de faire des hypothèses sur l'ordre de grandeur de la résistance r ou du courant i, ni sur l'impédance caractéristique de la ligne.

Ainsi, en supposant un fonctionnement idéal des générateurs de courant, la condition de compensation s'exprime par la relation : R.I/2 = (R/2 + r). i

La condition de compensation pourrait être satisfaite grâce à un dimensionnement approprié des résistances et des sources de courant de l'émetteur-récepteur. Cependant, dans la perspective d'une réalisation intégrée, il faut prévoir des moyens permettant d'ajuster automatiquement les caractéristiques des composants et des circuits de façon à compenser les dispersions de fabrication et les dérives de caractéristiques.

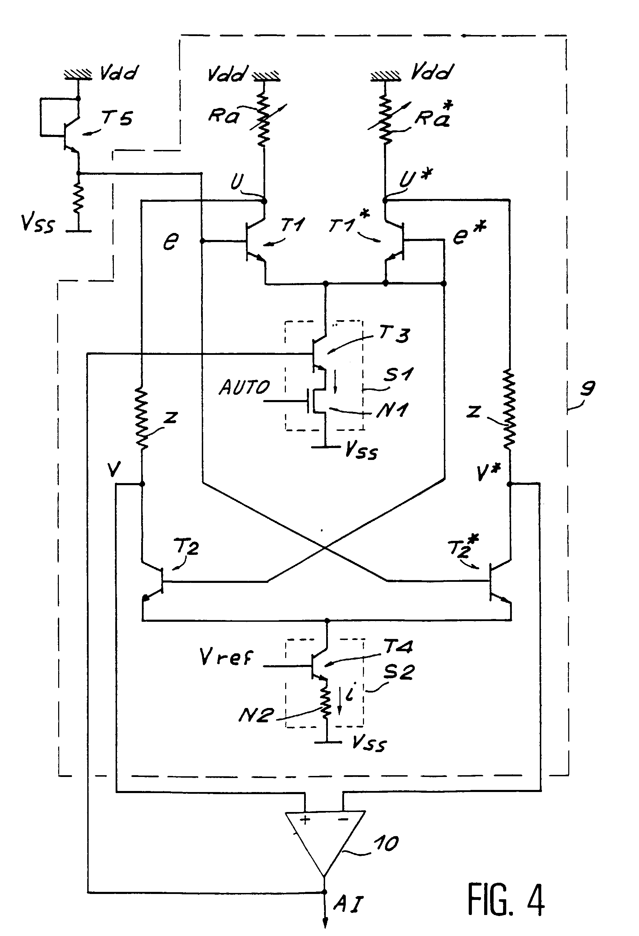

Dans ce but, on prévoit des moyens d'asservissement représentés schématiquement à la figure 2. Cette figure représente un circuit intégré comportant plusieurs émetteurs-récepteurs dont seuls les amplificateurs bidirectionnels 1 sont représentés. Chaque amplificateur 1 est relié à une ligne associée L par l'intermédiaire des plots B du circuit intégré. Le circuit comporte des moyens d'asservissement des courants I et des impédances d'adaptation R des amplificateurs 1. L'asservissement de I est effectué au moyen d'un circuit de commande de courant 2 relié à une impédance d'asservissement Ra de constitution et de dimensionnement fonction des impédances R. Le circuit 2 fournit un signal AI de réglage de courant appliqué à l'entrée de réglage des sources de courant S1 des amplificateurs 1. Le circuit 2 est conçu de façon à régler le courant I des sources de courant pour vérifier la condition de compensation évoquée précédemment. La description détaillée du circuit 2 sera donnée en relation à la figure 4.

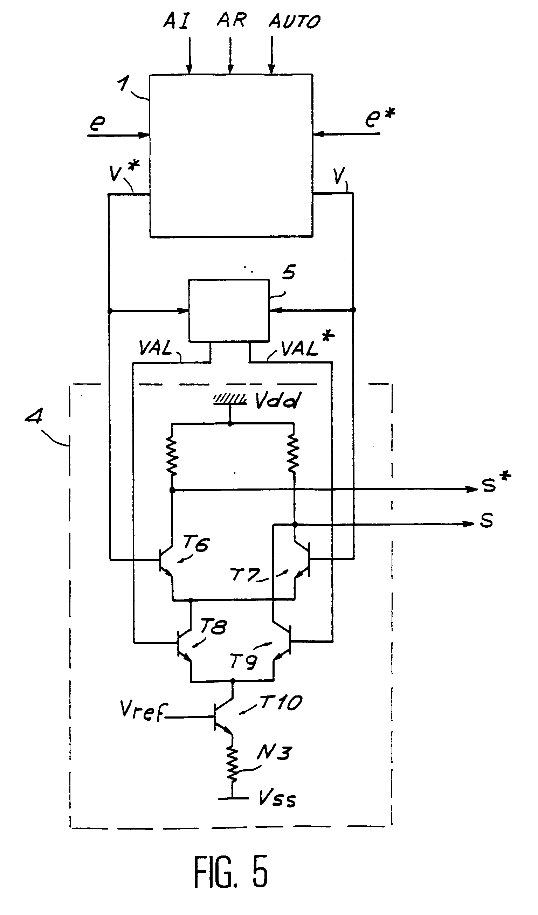

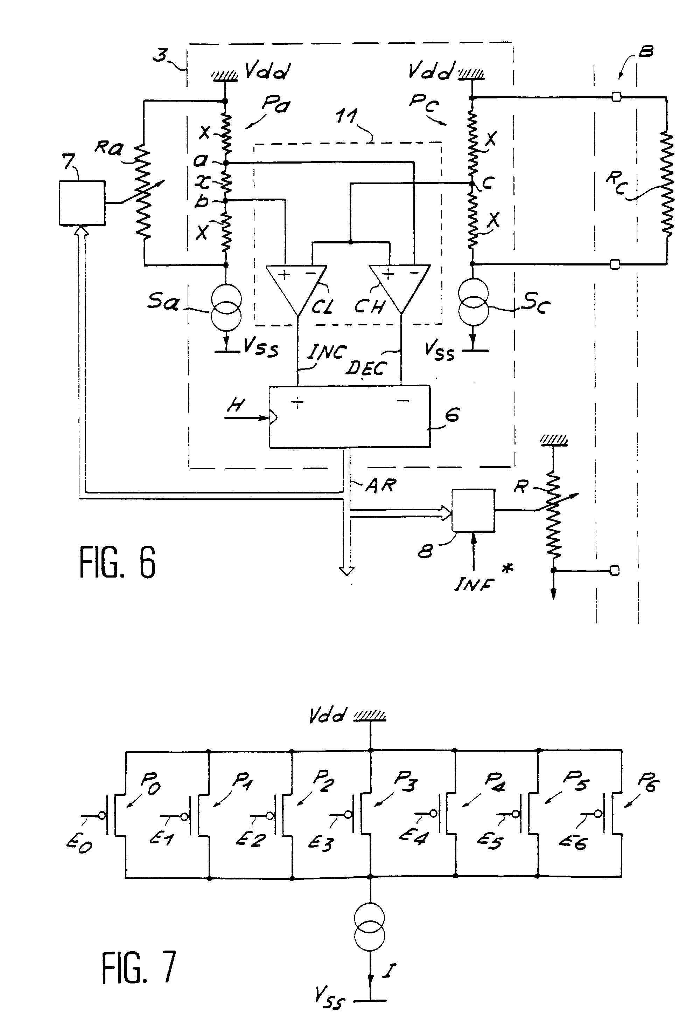

Les moyens d'asservissement des impédances R comportent un circuit de commande de résistance 3 relié à l'impédance d'asservissement Ra et à une impédance calibrée Rc extérieure au circuit intégré. Le circuit 3 fournit un signal de réglage AR de l'impédance d'asservissement Ra et des impédances R des amplificateurs. Le circuit 3 asservit la valeur des résistances Ra et R à la valeur de la résistance calibrée Rc égale à l'impédance caractéristique des lignes L. Le circuit 3 sera décrit en détail en référence à la figure 6.

Les moyens d'asservissement des courants I et des impédances R assurent que la condition de compensation sera vérifiée quelles que soient les dispersions de fabrication et les dérives de caractéristiques tout en maintenant la condition d'adaptation des impédances d'adaptation.

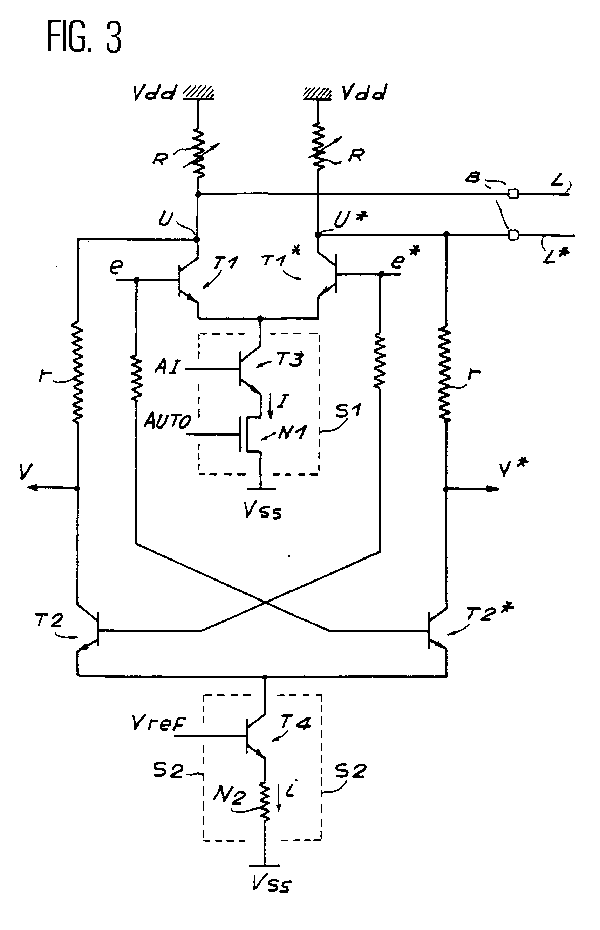

La figure 3 représente une réalisation en technologie BiCMOS d'un amplificateur bidirectionnel de type différentiel. Il est fonctionnellement équivalent à deux amplificateurs bidirectionnels conformes à la figure 1, disposés symétriquement et reliés respectivement aux lignes L, L* d'une liaison différentielle. Comme en mode différentiel une seule des voies est active à la fois, il suffit de prévoir une seule source de courant S1, S2 commune aux générateurs de courant G1, G2, associés aux deux voies.

Ainsi, la voie de gauche associée à la ligne L comporte une impédance d'adaptation R reliée par le point U à la ligne L et au collecteur d'un transistor bipolaire T1 dont l'émetteur est relié à la première source de courant commune S1. La base du transistor T1 reçoit le signal de commande d'émission e. Le collecteur du transistor T1 est relié au collecteur V d'un second transistor T2 par l'intermédiaire de l'impédance r. L'émetteur du transistor T2 est relié à la seconde source de courant commune S2. Symétriquement, la voie de droite reliée à la seconde ligne L* de la liaison différentielle comporte une impédance d'adaptation R reliée par le point U* au collecteur d'un transistor T1* dont l'émetteur est relié à la source de courant commune S1. Le collecteur du transistor T1* est relié au collecteur V* du transistor T2* par l'intermédiaire de l'impédance r. L'émetteur du transistor T2* est relié à la seconde source de courant commune S2. Le transistor T1* reçoit sur sa base le signal e* complément du signal e. Les signaux e et e* constituent des signaux différentiels de commande d'émission. Ces signaux sont complémentaires et représentatifs d'une valeur logique déterminée. Les signaux e et e* sont appliqués respectivement sur la base des transistors T2* et T2, par l'intermédiaire de résistances servant à compenser la constante de temps due à la capacité de structure des impédances R.

La source de courant S1 est constituée d'un transistor bipolaire T3 dont le collecteur est relié aux émetteurs des transistors T1 et T1* et dont l'émetteur est relié au potentiel négatif Vss par l'intermédiaire du chemin drain-source d'un transistor NMOS N1. La base du transistor T3 est commandée par le signal de réglage AI et la grille du transistor N1 reçoit le signal de commande d'alimentation AUTO. De façon analogue, la seconde source de courant S2 est constituée d'un transistor bipolaire T4 dont le collecteur est relié aux émetteurs des transistors T2 et T2* et dont l'émetteur est relié à la tension Vss par l'intermédiaire d'une résistance N2.

Le fonctionnement du circuit de la figure 3 se déduit facilement de celui de la figure 1 grâce aux remarques suivantes. Pour chaque voie, le premier générateur de courant G1 est constitué du transistor T1 ou T1* faisant fonction d'interrupteur et de la première source de courant commune S1. De même, le second générateur de courant G2 est formé du transistor T2 ou T2* et de la seconde source de courant S2. Chaque voie fonctionne alors exactement comme le circuit de la figure 1 mais, compte tenu du mode de fonctionnement différentiel, un seul des signaux de commande d'émission e, e* est actif à la fois, aussi bien pour l'émetteur-récepteur de la station considérée que pour celui de la station éloignée. Il en résulte que, grâce à la compensation décrite précédemment, les tensions présentes aux bornes de mesure V et V* prendront respectivement les valeurs - RI et -RI/2 ou - RI/2 et - RI selon que la voie de gauche ou la voie de droite de l'émetteur de la station éloignée est active ou non. Les tensions V et V* constituent donc un signal différentiel fonction du signal différentiel d'émission de la station éloignée et pourra être exploité en aval de l'amplificateur après une mise en forme appropriée.

La figure 4 représente un circuit de commande de courant 2 particulièrement adapté pour commander l'amplificateur différentiel de la figure 3. Nous avons vu que la condition de compensation impose que la chute de tension dans les résistances R et r en série doit être la même lorsque l'émetteur considéré est seul à émettre et lorsqu'aucun émetteur n'émet. Par conséquent, le circuit de la figure 4 est conçu de façon à simuler ces deux cas, à comparer les tensions de mesure correspondantes et à régler le courant I de façon à obtenir l'égalité de ces tensions.

Dans ce but, le circuit de la figure 4 comporte un circuit d'asservissement 9 de même constitution et de même dimensionnement pour l'essentiel que l'amplificateur différentiel de la figure 3 mais modifié de façon à réaliser sur ses deux voies les simulations recherchées. En particulier, un signal de commande d'émission différentiel fixe est appliqué aux bases des transistors T1, T1* de façon à les rendre respectivement conducteur et non-conducteur. Pour cela, l'émetteur du transistor T1* est relié à sa base tandis que la base du transistor T1 reçoit une tension positive par rapport à Vss. Cette tension est fournie par un montage comportant un transistor bipolaire T5 dont la base et le collecteur sont reliés à la masse et dont l'émetteur est relié au potentiel Vss par une résistance appropriée. L'émetteur du transistor T5 fournit la tension de base du transistor T1.

D'autre part, l'impédance d'adaptation R et la seconde impédance r sont remplacées respectivement par une impédance d'asservissement Ra, Ra* et une impédance z. Le choix des valeurs de Ra, Ra* et z doit tenir compte du fait que, contrairement au circuit 9, l'émetteur-récepteur a ses impédances d'adaptation R reliées aux lignes et que par conséquent la source de courant S1 alimente une impédance équivalente égale à la moitié de l'impédance d'adaptation. Ainsi, selon une première possibilité, les impédances d'asservissement Ra, Ra* pourraient être réalisées en plaçant en parallèle deux impédances identiques aux impédances d'adaptation R utilisées dans l'émetteur-récepteur. Dans ce cas, l'impédance z serait identique à r.

Selon une autre possibilité, on utilise des impédances d'asservissement Ra, Ra* identiques à l'impédance d'adaptation R, en choisissant pour z une valeur égale au double de celle de la seconde impédance r. L'impédance r sera alors réalisée par la mise en parallèle de deux impédances identiques à z. Cette solution simplifie la réalisation des impédances d'asservissement Ra, Ra* qui, comme les impédances d'adaptation R, sont de préférence réglables. De plus, cette solution permet d'utiliser l'impédance Ra de la voie de gauche pour réaliser l'asservissement des impédances R, comme nous le verrons plus loin.

Selon encore une autre possibilité, les impédances R et Ra d'une part, r et z d'autre part ont la même valeur mais le courant fourni par la source de courant S1 du circuit d'asservissement 9 est moitié de celui fourni par la source S1 de l'amplificateur bidirectionnel. Pour cela, il suffit de dimensionner le transistor N1 du circuit 9 pour qu'il ait une résistance double de celui de l'amplificateur. Dans la mesure où R n'est pas négligeable par rapport à r, il conviendrait que Ra* soit égale à R/2.

Dans tous les cas, toujours en supposant un fonctionnement linéaire, les tensions V et V* sont proportionnelles aux chutes de tension aux bornes des impédances R et r de l'émetteur respectivement lorsqu'il est seul à émettre et lorsqu'aucun émetteur n'émet. Les tensions V et V* sont appliquées respectivement à l'entrée directe et inverseuse d'un amplificateur différentiel 10 à grand gain et forte impédance d'entrée dont la sortie fournit le signal de réglage de courant AI qui est ensuite appliqué à la base des transistors T3 des sources de courant S1 du circuit d'asservissement 9 et des amplificateurs bidirectionnels 1.

Selon une variante de réalisation, l'amplificateur 10 pourrait être remplacé par un montage numérique analogue à celui utilisé pour l'asservissement des impédances comme nous le verrons en détail ultérieurement.

De façon évidente, le circuit de la figure 4 règle le courant I des sources de courant S1 de façon à maintenir en permanence la condition de compensation recherchée.

Le circuit d'asservissement 9 étant pour l'essentiel de même constitution et dimensionnement que les amplificateurs bidirectionnels 1, il reproduit avec une bonne précision leur comportement indépendamment des dispersions de fabrication et tient compte des courants de fuite éventuellement non négligeables des transistors de commutation T1, T1*, T2, T2*.

Bien entendu, ce circuit assure que la condition de compensation sera strictement vérifiée du point de vue statique, ce qui est suffisant en général car l'impédance caractéristique de la ligne, donc les impédances R et r, sont, pour des fréquences élevées, pratiquement des résistances pures. L'homme du métier pourra bien sûr adapter cette réalisation pour mieux tenir compte des caractéristiques réelles de la ligne dans chaque cas particulier.

Selon un aspect intéressant de la réalisation de l'amplificateur bidirectionnel et du circuit d'asservissement, ces derniers comportent une seconde source de courant S2 identique formée du transistor T4 en série avec une résistance N2. Il en résulte que la tension Vref appliquée à la base du transistor T4 fixe la chute de tension dans la résistance N2 et par conséquent le courant i qui la traverse. Ainsi, compte tenu de la condition de dimensionnement imposée par le circuit d'asservissement, le choix de la tension Vref détermine indirectement le produit R.I qui doit être fixé avec précision car il fixe la dynamique des signaux.

Dans le cadre d'une application à un circuit d'interface parallèle-série, série-parallèle pour réaliser l'interconnexion d'un grand nombre d'unités, il est intéressant de prévoir la possibilité de couper l'alimentation des circuits de puissance des émetteurs et récepteurs inactifs. C'est pourquoi les sources de courant S1 sont munies d'un transistor NMOS N1 commandé par un signal de mise sous tension AUTO. Cette disposition présente l'avantage, notamment dans le cas d'une réalisation intégrée, de réduire la consommation du circuit d'interface.

Il convient cependant de tenir compte de cette possibilité dans la conception de la partie réception de l'émetteur-récepteur. En effet, si l'émetteur-récepteur de la station éloignée est à l'état de repos, c'est-à-dire a sa source de courant S1 inactive, aucune des lignes différentielles n'est alimentée par cet émetteur-récepteur. Il en résulte qu'aucune tension différentielle V, V* n'apparaît en sortie de l'amplificateur bidirectionnel, ce qui pourrait provoquer une détection erronée des signaux de réception. Pour éviter cette difficulté, il est prévu un ensemble de moyens dans la partie réception de l'émetteur-récepteur pour traiter ce cas.

La figure 5 représente la partie réception dans son ensemble. On retrouve évidemment l'amplificateur bidirectionnel 1 qui est associé à un circuit de mise en forme 4 et à un circuit de détection d'activité de ligne 5. Le circuit 5 reçoit les tensions V, V* de l'amplificateur 1 et fournit un signal différentiel VAL, VAL* résultant de la comparaison entre la tension différentielle V, V* et une valeur de seuil déterminée. Le circuit 5 est constitué en fait d'un ensemble de comparateurs pour comparer respectivement les tensions V et V* à une valeur de seuil comprise entre les tensions maximales et minimales pouvant être prises par V et V* lorsque la station éloignée est active. Si l'une des tensions V ou V* est supérieure à ce seuil en valeur absolue, un circuit logique place respectivement à un niveau haut et bas les sorties VAL et VAL* du circuit 5. Dans le cas contraire, les signaux VAL et VAL* sont placés respectivement à des niveaux bas et haut. La réalisation du circuit 5 étant à la portée de l'homme du métier, nous n'en donnerons pas une description plus détaillée.

Le circuit de mise en forme 4 est une porte ET en technologie ECL composée de deux transistors T6, T7 reliés entre eux par leur émetteur et dont les collecteurs sont reliés chacun à la masse par l'intermédiaire d'une résistance. Deux autres transistors T8, T9 ont leur émetteur relié au collecteur d'un cinquième transistor T10 dont l'émetteur est relié à la tension Vss par l'intermédiaire d'une résistance N3. Le collecteur du transistor T8 est relié aux émetteurs des transistors T6 et T7 tandis que le collecteur du transistor T9 est relié au collecteur du transistor T7. La base du transistor T10 reçoit la tension de référence Vref de façon à fixer le courant circulant dans la résistance N3. Les bases des transistors T6 et T7 reçoivent respectivement les tensions V* et V. Les bases des transistors T8 et T9 reçoivent respectivement les signaux d'activité de ligne VAL et VAL*. Les tensions s* et s des collecteurs des transistors T6 et T7 constituent les signaux de réception différentiels utilisables en aval dans le reste du circuit.

Le circuit de la figure 5 fonctionne de la façon suivante. Si la station éloignée est active, il existe une tension différentielle V, V* qui est détectée par le circuit 5 fournissant alors un signal différentiel positif VAL, VAL*. Il en résulte que le transistor T8 est conducteur et que le transistor T9 est bloqué. Le circuit 4 fonctionne alors en amplificateur différentiel produisant sur ses sorties s, s* un signal différentiel fonction de la tension différentielle V, V*.

Si par contre le circuit 5 détecte l'inactivité de la station éloignée, les signaux VAL et VAL* prennent des valeurs complémentaires du cas précédent. Le transistor T8 est alors bloqué et le transistor T9 est conducteur. Il en résulte que le signal s est à l'état bas et le signal s* est à l'état haut, forçant ainsi la sortie différentielle du circuit de mise en forme à la valeur 0 logique.

La description qui précède montre l'intérêt de fixer avec assez de précision la valeur du produit R.I de façon à permettre un bon fonctionnement des comparateurs du circuit de détection 5.

La figure 6 représente les moyens d'asservissement des impédances d'adaptation R. Ils comprennent un comparateur d'impédance 3 relié à une impédance de référence Rc et à une impédance d'asservissement Ra. L'impédance de référence Rc est une impédance calibrée extérieure au circuit intégré et l'impédance Ra est une impédance intégrée réglable de mêmes constitution et dimensionnement que les impédances d'adaptation R à régler.

Le comparateur d'impédance 3 délivre un signal de réglage numérique AR relié aux décodeurs 7, 8 associés respectivement à l'impédance Ra et à chaque impédance d'adaptation R. Chaque décodeur 7, 8 commande la valeur de l'impédance associée. Les décodeurs 8 associés aux impédances d'adaptation R se distinguent du décodeur 7 de l'impédance Ra par la présence d'une entrée supplémentaire INF* prévue pour les opérations de test qui seront expliquées ultérieurement.

Comme pour l'asservissement du courant, la réalisation décrite ci-dessous permet d'ajuster la partie purement résistive des impédances d'adaptation. L'homme du métier pourra modifier cette réalisation pour tenir compte, si nécessaire, des caractéristiques réelles de la ligne.

Le comparateur d'impédance 3 comprend deux ponts diviseurs de tension Pa, Pc branchés en parallèle respectivement avec Ra et Rc. Ces deux montages parallèles sont alimentés respectivement par les sources de courant Sa et Sc identiques. Dans le cas où l'impédance Ra est celle utilisée dans le circuit 9 d'asservissement des courants, la source Sa est en fait la source S1 du circuit 9. Le comparateur 3 comporte également un comparateur de tension 11 relié aux ponts diviseurs Pa et Pc ainsi qu'un compteur-décompteur 6. Le comparateur de tension 11 est en fait constitué de deux comparateurs CL, CH fournissant respectivement un signal INC d'incrémentation appliqué à l'entrée de comptage du compteur-décompteur 6 et un signal de décrémentation DEC appliqué à son entrée de décomptage. Le point milieu c du pont diviseur Pc de résistance 2X est relié à l'entrée inverseuse du comparateur CL et à l'entrée directe du comparateur CH. Le pont diviseur Pa comporte deux bornes intermédiaires a, b telles que la résistance X entre le point a et la masse et la résistance entre le point b et la source de courant Sa soient égales, une résistance x entre les points a et b étant égale à une fraction de X. Le point a est relié à l'entrée inverseuse du comparateur CH et le point b est relié à l'entrée directe du comparateur CL. Cette disposition permet par un dimensionnement approprié de X et x de produire un effet d'hystérésis tel que les signaux d'incrémentation INC ou de décrémentation DEC soient actifs lorsque la valeur de l'impédance d'asservissement Ra est respectivement inférieure ou supérieure à la valeur de l'impédance de référence Rc d'une valeur de seuil déterminée. Ceci présente l'avantage d'éviter une instabilité dans la régulation des impédances d'adaptation.

Cette valeur de seuil sera définie par un pourcentage d'erreur imposé et portant sur la valeur de Rc. On peut constater d'autre part que le fonctionnement du comparateur 3 est pratiquement indépendant des dispersions de fabrication, dans la mesure où X est suffisamment grand par rapport à Rc, ce qui est toujours possible.

Ainsi, l'état du compteur-décompteur 6 est représentatif de la valeur de réglage à appliquer aux impédances R et Ra pour que leur valeur soit égale à la valeur de l'impédance de référence Rc à un pourcentage d'erreur près.

L'asservissement de la figure 6 est donc du type à commande numérique. On aurait pu imaginer une solution analogique utilisant par exemple des transistors PMOS, les résistances des chemins drain-source constituant les impédances réglables R et Ra, les grilles étant commandées par un signal de réglage analogique représentatif de la différence entre la valeur de l'impédance calibrée Rc et celle de l'impédance d'asservissement Ra. Or, cette solution présente l'inconvénient que le signal de réglage analogique est exposé à des altérations lors de sa transmission dans le circuit, en particulier dans le cas d'un circuit intégré comportant un grand nombre d'émetteurs-récepteurs.

La réalisation numérique de la figure 6 résout donc ce problème. L'utilisation, suggérée ci-dessus, de transistors PMOS comme impédances réglables serait possible en leur associant des circuits de conversion numérique-analogique. Cependant, cette solution nécessiterait d'utiliser des transistors volumineux dont la capacité de structure pourrait perturber le fonctionnement à très haute fréquence.

Une solution entièrement numérique est donc préférable. Pour cela, chaque impédance variable est réalisée au moyen d'une pluralité de résistances branchées sélectivement en parallèle par un signal de réglage numérique. On peut noter que le cas de l'impédance Ra est légèrement différent de celui des impédances R car il n'est pas nécessaire de prévoir la possibilité pour Ra de prendre une valeur infinie pour les opérations de test. Par conséquent, l'une des résistances de Ra pourra être branchée en permanence.

La figure 7 représente une telle réalisation où chaque résistance est constituée d'un transistor PMOS P0-P6. Les transistors sont branchés en parallèle, leurs sources étant reliées à la masse et leurs drains à la source de courant associée. Les grilles des transistors P0-P6 sont commandées respectivement par les signaux E0-E6. La résistance du chemin drain-source de chaque transistor prend alors une valeur qui dépend du dimensionnement du transistor (sa largeur de grille par exemple) ainsi que du procédé de fabrication, avec une incertitude autour d'une valeur typique correspondant au cas le plus probable.

On pourrait imaginer de choisir un dimensionnement des résistances P0-P6 de façon à réaliser une pondération d'un code binaire (les résistances sont toutes différentes et proportionnelles à une puissance de 2) mais cette réalisation pose le problème des commutations simultanées de plusieurs résistances qui pourraient provoquer des perturbations au niveau des lignes.

Pour éviter ce problème, il est préférable d'utiliser des résistances dimensionnées de façon à ce que leurs activations successives conduisent à des valeurs régulièrement décroissantes de la résistance équivalente en résultant. En contrepartie, ceci entraîne, pour une précision donnée, une augmentation du nombre de résistances et donc du nombre de signaux de commande. Aussi, pour compenser cet inconvénient, la solution choisie consiste à utiliser comme signal de réglage AR un signal de réglage numérique codé et à associer à chaque impédance à régler un décodeur 7, 8 correspondant. Le code utilisé est avantageusement un code de Gray fourni directement par le compteur-décompteur 6.

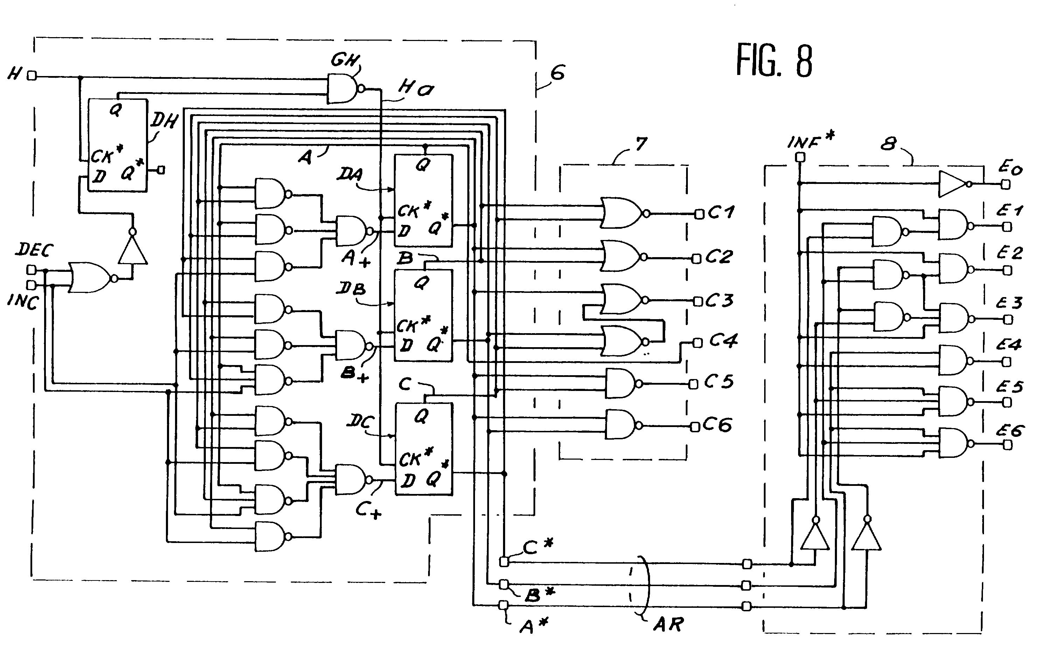

Une réalisation détaillée de ce compteur-décompteur et des décodeurs associés est représentée à la figure 8.

Avant de décrire la figure 8, il convient de donner un exemple de réalisation détaillée des circuits précédents.

L'impédance caractéristique de la ligne étant de 50 ohms, on impose par exemple une erreur de moins de 5 % sur les impédances d'adaptation, dans les limites d'une dispersion d'environ 25 % sur les valeurs des composants.

Les impédances d'adaptation doivent alors pouvoir varier régulièrement entre 37 et 63 ohms environ dans le cas typique. Les calculs et les simulations conduisent alors à une solution à 7 transistors P0 à P6 de résistances croissantes dont les dimensionnements sont faciles à calculer en fonction de la technologie employée.

D'autre part, les signaux d'incrémentation INC ou de décrémentation DEC doivent s'activer lorsque l'impédance Ra est respectivement inférieure ou supérieure de 5 % à l'impédance Rc. Les calculs montrent alors, avec Rc = 50 ohms, que l'on peut prendre X = 500 ohms et x = 50 ohms. En prenant R.I. = 0,5 V, il en résulte une immunité au bruit pour un niveau de bruit inférieur à 3,3 mV.

La figure 8 représente le compteur-décompteur 6 et les décodeurs 7 et 8 dans le cas particulier où les impédances d'adaptation comportent 7 transistors PMOS en parallèle.

Le décodeur 7 associé à Ra possède seulement 6 sorties C1 à C6 reliées respectivement aux grilles des transistors P1 à P6. Le transistor P0 est rendu conducteur en permanence par une polarisation négative de sa grille. Lorsqu'une sortie C1-C6 du décodeur 7 prend la valeur 0 logique, le transistor qu'elle commande P1-P6 est rendu conducteur.

Le décodeur 8 comporte 7 sorties E0 à E6 et a un fonctionnement analogue au décodeur 7 à la différence près que le premier transistor P0 peut être conducteur ou bloqué selon que la sortie E0 est à 0 ou à 1.

Le compteur-décompteur 6 comprend trois bascules DA, DB, DC de type D définissant l'état du compteur. Les bascules DA, DB, DC reçoivent respectivement sur leurs entrées D les signaux logiques $A_+$, $B_+$, $C_+$ fournis par un ensemble de portes logiques en fonction des signaux INC et DEC et des états A, B, C des bascules DA, DB, DC.

Ce circuit logique effectue les équations suivantes :

(1) $A_+ = [(A.B^*)^*.(A.C)^*.(C^*.INC)^*]^*$
(2) $B_+ = [(B.C^*)^*.(A^*.INC)^*.(A.C.DEC)^*]^*$
(3) $C_+ = [(A^*.B^*)^*.(A^*.DEC)^*.(B^*.DEC)^*.(A.B.INC)^*]^*$

où le symbole * indique l'opération de complémentation.

Grâce à cette logique de ,commande, le compteur peut prendre sept états différents, l'état 000 étant interdit. Chaque état A, B, C correspond à la valeur codée en code de Gray du nombre de transistors qui doivent être à l'état conducteur. Cette disposition implique que toute modification imposée à la valeur des impédances à régler se traduit par le changement d'état d'une seule des bascules DA, DB, DC à la fois.

Afin d'améliorer la sécurité de fonctionnement du compteur-décompteur, les bascules sont synchronisées par les fronts descendants d'un signal d'horloge Ho fonction d'un signal primaire H et de l'état d'une bascule supplémentaire DH. La bascule DH reçoit sur son entrée d'horloge inverse CK* le signal d'horloge H et sur son entrée D la somme logique DEC+INC. Le signal d'horloge H et la sortie non inverseuse Q de la bascule DH sont reliés aux entrées d'une porte NON-ET (NAND) GH délivrant le signal Ho aux entrées d'horloge inverses CK* des bascules DA, DB, DC.

Le compteur-décompteur 6 fonctionne de la façon suivante. Lorsque l'écart en valeur absolue entre les valeurs de Ra et de Rc est inférieur au seuil, les signaux DEC et INC restent à 0. Lors d'un front descendant du signal d'horloge H, la bascule DH est mise à 0 et la sortie Ho de la porte GH est maintenue à 1, ce qui interdit tout changement d'état des bascules DA, DB, DC. Si par contre l'écart entre Ra et Rc dépasse le seuil, l'un des signaux DEC ou INC est à 1 et l'entrée D de la bascule DH reçoit la valeur 1 logique. A l'apparition du front descendant d'horloge suivant, l'état de la bascule DH repasse à 1 et la sortie de la porte GH délivre un signal complémentaire du signal d'horloge H. La sortie de la porte GH est donc à 1 mais repasse à 0 à l'apparition du front montant suivant de H et les bascules DA, DB, DC sont réactualisées conformément aux équations (1), (2), (3) précédentes.

Le fonctionnement qui vient d'être décrit montre que le compteur-décompteur n'est activé que lorsqu'une modification doit avoir lieu et ceci permet de simplifier le circuit logique de commande des bascules. De plus, grâce à la bascule DH et à la porte GH, les bascules DA, DB, DC sont parfaitement synchronisées par l'horloge H sans risque de perturbation par l'apparition des signaux INC ou DEC.

Les décodeurs 7 et 8 reçoivent les signaux d'état A, B, C des bascules DA, DB, DC ou leur complément et fournissent en sortie les signaux C1-C6 ou E0-E6 commandant les impédances variables associées.

Les sorties C1-C6 du décodeur 7 vérifient les équations suivantes :

(4)

$$C1 = (B + C)^*$$

$$C2 = (A^* + B)^*$$

$$C3 = [A^* + (B^* + C)^*]^*$$

$$C4 = A$$

$$C5 = (A^*. C)^*$$

$$C6 = (A^*. B^*)^*$$

Le décodeur 8 est prévu pour pouvoir commander son impédance à la valeur infinie lorsque le signal de test INF est à 1. D'autre part, pour limiter le nombre de lignes reliant le décompteur-décompteur 6 aux différents décodeurs 8 du circuit intégré, seuls les signaux A*, B*, C* issus des sorties inverseuses des bascules DA, DB, DC sont appliqués à l'entrée du décodeur 8. Compte tenu de ces contraintes, le décodeur 8 est conçu de façon à réaliser les équations logiques suivantes :

(5)

$$E0 = INF$$

$$E1 = (B^*.C^*.INF^*)^*$$

$$E2 = (A.B^*.INF^*)^*$$

$$E3 = (A.B^*)^*. (A.C)^*.INF^*$$

$$E4 = (A^*.INF^*)^*$$

$$E5 = (A^*.C.INF^*)^*$$

$$E6 = (A^*.B^*.INF^*)^*$$

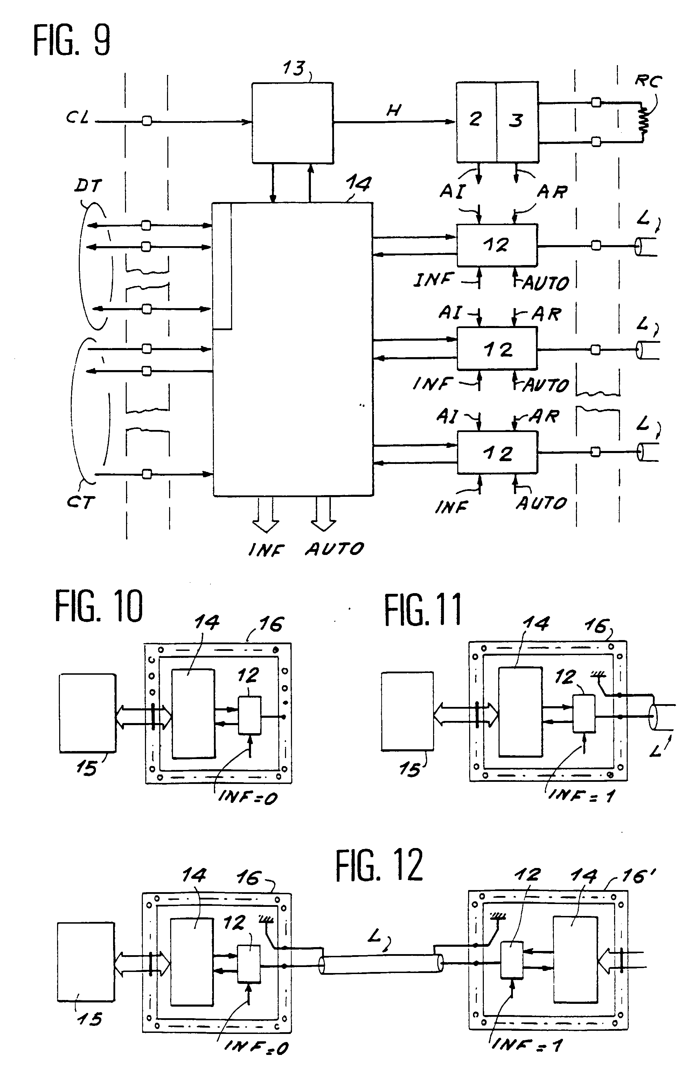

La figure 9 représente un circuit d'interface parallèle-série, série-parallèle dans lequel l'invention peut s'appliquer avantageusement. Ce circuit est supposé être réalisé sous forme de circuit intégré prévu pour être relié d'une part à des lignes d'entrée-sortie parallèles composées de lignes de données DT et de lignes de contrôle CT et d'autre part à des lignes de transmission série L.

Le circuit comprend des moyens de sérialisation-désérialisation 14 reliés aux entrées-sorties parallèles DT, CT ainsi qu'aux divers émetteurs-récepteurs 12 par des lignes d'émission et de réception série associées. Chaque émetteur-récepteur 12 est relié à une ligne de transmission bidirectionnelle L par l'intermédiaire d'un amplificateur 1 conforme à la description précédente. Chaque ligne L relie l'émetteur-récepteur associé a un autre émetteur-récepteur appartenant à une station éloignée.

Le circuit intégré comprend également les moyens d'asservissement 2, 3 du courant I et des impédances d'adaptation R des amplificateurs. Enfin, un générateur d'horloge 13 recevant un signal d'horloge maître CL fourni par une horloge extérieure pilote les moyens de sérialisation-désérialisation 14. En émission, le générateur 13 fonctionne en multiplieur de fréquence de façon à adapter le débit d'émission des données série au débit de réception des données parallèles. En réception, le générateur 13 effectue la régénération d'un signal d'horloge à la fréquence des données série à partir de ces données et effectue une division de fréquence pour contrôler la partie parallèle du sérialiseur-désérialiseur.

Les circuits 13 et 14 font l'objet d'un exemple de réalisation détaillée dans chacune des demandes de brevet français suivantes déposées le 11.07.90 : "Procédé et système de transmission numérique de données en série", n° 90.08811 ; "Dispositif de sérialisation et de désérialisation de données et système de transmission numérique de données en série en résultant", n° 90.08812 ; "Dispositif d'échantillonnage de données et système de transmission numérique de données en résultant", n° 90.08813.

Le circuit 14 comprend en outre des moyens pour sélectionner les émetteurs-récepteurs et leur fournir les signaux INF et AUTO en vue d'effectuer respectivement les opérations de test et la coupure d'alimentation des amplificateurs associés aux lignes inactives.

Le fonctionnement du circuit de la figure 9 est en grande partie classique et ne nécessite donc pas d'explication détaillée. Pour plus de précisions, on pourra se reporter aux demandes de brevet citées ci-dessus.

Il convient cependant de préciser que les moyens de sérialisation-désérialisation 14 comportent des circuits de contrôle de l'activité des émetteurs-récepteurs en fonction de commandes CT indiquant la station destinataire. Réciproquement, ces circuits sont prévus pour délivrer des signaux de contrôle sur l'interface parallèle en réponse à l'identité des lignes actives en réception. D'autre part, on peut prévoir des circuits de décodage fournissant les signaux INF et AUTO aux émetteurs-récepteurs désignés par des commandes CT appropriées. La réalisation pratique de ces circuits dépend essentiellement de l'interface parallèle choisie. Par exemple, si les commandes CT comportent une partie adresse et une partie contrôle, la partie adresse servira d'entrée à des décodeurs d'adresse. Des signaux de commande de test et de commande d'alimentation de la partie contrôle seront utilisés pour valider un des signaux INF ou AUTO sélectionné par le décodeur d'adresse.

Les figures 10, 11 et 12 symbolisent les opérations de test pouvant être effectuées sur le circuit intégré de la figure 9. Sur ces figures, le sérialiseur-désérialiseur 14 du circuit intégré 16 est relié par ses entrées-sorties parallèles à un appareil de test 15. Comme précédemment, le circuit 14 est relié aux émetteurs-récepteurs 12 dont un seul est représenté pour des raisons de clarté.

Selon une première possibilité illustrée à la figure 10, le circuit intégré 16 est testé après fabrication, avant d'être connecté aux lignes de transmission série. Dans ce cas, le testeur 15 commande la mise à 0 du signal INF de l'émetteur-récepteur à tester, ce qui entraîne que sa source de courant alimente les impédances d'adaptation dans leur configuration normale. Le testeur 15 commande ensuite l'émission par cet émetteur-récepteur d'un ensemble de données appliquées aux entrées parallèles du circuit 14. Le circuit 14 les convertit en données série et les transmet à l'émetteur-récepteur 12 sélectionné. En fonction des données série reçues, l'amplificateur 1 de l'émetteur-récepteur 12 reçoit des signaux de commande d'émission qui activent en conséquence les sources de courant alimentant les impédances d'adaptation.

Comme la ligne n'est pas branchée, la source S1 alimente seulement l'impédance d'adaptation R de la voie active, donc débite sur une impédance double de l'impédance équivalente qu'elle alimente lorsque l'émetteur-récepteur est en fonctionnement normal. Par conséquent, la tension V ou V* de la voie active prend la valeur - R.I. D'autre part, la tension V* ou V de la voie inactive prend la valeur - (R + r)i, c'est-à-dire pratiquement - RI/2.

Les tensions V et V* qui apparaissent sur les bornes de réception de l'amplificateur 1 reproduisent donc les signaux de commande d'émission qui, après mise en forme et conversion en données parallèles, sont reçus par l'appareil de test 15. Ce dernier effectue alors la comparaison entre les données parallèles émises initialement et celles reçues. S'il y a coïncidence, cela signifie que les circuits 13, 14 et 12 ont fonctionné correctement.

La même opération est ensuite effectuée en sélectionnant successivement les autres émetteurs-récepteurs du circuit.

Ainsi, grâce à la conception particulière des émetteurs-récepteurs, les opérations de test du circuit intégré sont très simples et permettent de vérifier non seulement le bon fonctionnement des émetteurs-récepteur mais aussi de tous les circuits annexes et intermédiaires tels que le sérialiseur-désérialiseur 14

Des tests peuvent aussi être effectués alors que le circuit intégré est en place dans un système, ses émetteurs-récepteurs étant reliés aux lignes de transmission L.

Selon une première possibilité illustrée à la figure 11, l'appareil de test 15 commande la mise à 1 du signal INF de l'émetteur-récepteur à tester, ce qui force ses impédances d'adaptation à la valeur infinie. La source de courant de son amplificateur 1 alimente les seules lignes de transmission L. Comme les impédances d'adaptation ont une valeur égale à l'impédance caractéristique des lignes, nous nous retrouvons dans la même situation qu'à la figure 10 et le test peut être effectué de la même façon.

Dans ce cas, le test donne une indication supplémentaire sur l'intégrité des connexions entre l'émetteur-récepteur et les bornes du circuit intégré et des connexions entre les bornes et les lignes. ,

On peut noter que les deux tests précédents simulent le fonctionnement normal de façon rigoureuse dans le cas d'une transmission sans perte de courant.

Selon une autre possibilité illustrée à la figure 12, les émetteurs-récepteurs de deux circuits intégrés 16, 16′ sont reliés entre eux par les lignes L et l'appareil de test commande la mise à 0 du signal INF de l'émetteur-récepteur du circuit intégré à tester 16 et la mise à 1 du signal INF de l'émetteur-récepteur correspondant de l'autre circuit intégré 16′.

Dans ce cas, l'émetteur-récepteur 12 du circuit 16 est dans sa configuration normale, tandis que celui du circuit 16′ a ses impédances d'adaptation déconnectées.

Ainsi, la ligne L est ouverte à son extrémité qui est reliée au circuit 16′ et par conséquent, les signaux émis par le circuit 16 sont transmis par la ligne vers le circuit 16′, y sont réfléchis puis retransmis par la ligne vers le circuit 16. Il en résulte que la réflexion des signaux simule une émission du circuit 16′ et une transmission par une ligne de longueur double de celle de la ligne réelle, avec possibilité de collisions entre les signaux émis et les signaux reçus.

Le test peut donc être effectué comme précédemment mais il fournira une indication supplémentaire sur l'intégrité de la ligne et des connexions entre la ligne et l'émetteur-récepteur de la station éloignée. De plus, ce test prend en compte les éventuelles pertes de courant au cours de la transmission. Enfin, l'effet de réflexion peut être exploité pour localiser les défauts de ligne par analyse des signaux de réception et du retard entre l'émission et la réception des signaux de test.

Il est intéressant de remarquer que les deux dernières possibilités de test peuvent avantageusement être combinées pour localiser les défauts. Ainsi, si le test selon la figure 12 révèle un défaut, le test selon la figure 11 indiquera si le défaut est dû ou non au circuit 16.

Dans le contexte d'un circuit d'interface parallèle-série, série-parallèle, les procédés de test précédents sont particulièrement avantageux dans le cas d'une liaison à haut débit car uniquement des signaux à basse fréquence sont échangés entre l'appareil de test et le circuit intégré à tester.

Selon une variante de réalisation du circuit intégré, on y inclut des circuits de test, commandés de l'extérieur, capables d'engendrer automatiquement des signaux de test parallèles, d'effectuer les comparaisons et de mémoriser les résultats de ces comparaisons dans des registres accessibles de l'extérieur.

Ce circuit de test comprendra un générateur de signaux de test, par exemple un générateur de signaux aléatoires, commandé par un circuit d'activation qui sera programmé pour déclencher l'envoi d'un nombre déterminé de mots de test. Comme l'horloge de réception est régénérée à partir des signaux série reçus, elle est indépendante de l'horloge d'émission. Aussi, les circuits de comparaison devront être conçus pour tenir compte des décalages entre les signaux émis et les signaux reçus. Ceci peut être réalisé au moyen de mémoires tampons. Cependant une réalisation moins encombrante consiste à associer aux circuits de comparaison un générateur de signaux de test identique à celui d'émission, programmé de la même façon et synchronisé par l'horloge de réception. Cette réalisation permet de supprimer les mémoires tampons ainsi que les circuits de resynchronisation qui seraient nécessaires autrement.

Le fait de prévoir les circuits de test à l'intérieur du circuit intégré présente le double avantage de ne pas nécessiter un appareil de test extérieur et de permettre une bien meilleure exhaustivité des tests. En effet, l'utilisation d'un appareil de test ralentirait considérablement les opérations de test à cause de la désynchronisation entre l'émission et la réception, ce qui implique de nombreuses opérations d'écriture et de lecture dans la mémoire de l'appareil de test.

La réalisation des générateurs de signaux de test, des moyens de comparaison et de mémorisation est à la portée de l'homme du métier et ne nécessite donc pas une description plus détaillée.

## Revendications

1. Procédé de test d'un émetteur-récepteur prévu pour être relié par une liaison de transmission bidirectionnelle à un autre émetteur-récepteur analogue, ladite liaison étant constituée par au moins une ligne de transmission (L, L*), ledit émetteur-récepteur comportant pour chaque ligne (L, L*) une borne d'entrée-sortie (B) prévue pour être reliée à une extrémité de ladite ligne (L,L*), une impédance d'adaptation (R) connectée à celle-ci et des moyens d'amplification (1) pour produire des signaux d'émission sur ladite borne (B) en réponse à des signaux de commande d'émission (e, e*) et pour produire des signaux de réception (s, s*) en réponse aux signaux d'émission produits sur ladite borne (B) par l'autre émetteur-récepteur, ledit procédé étant caractérisé en ce que, ladite impédance d'adaptation (R) étant branchée entre ladite borne (B) et un potentiel fixe (Vdd) et ledit émetteur-récepteur n'étant pas relié à ladite liaison de transmission bidirectionnelle, il consiste à produire des signaux de commande d'émission (e, e*) et à les comparer aux signaux de réception (s, s*) fournis par lesdits moyens d'amplification (1).

2. Procédé de test d'un émetteur-récepteur relié par une liaison de transmission bidirectionnelle à un autre émetteur-récepteur analogue, ladite liaison étant constituée par au moins une ligne de transmission (L, L*), ledit émetteur-récepteur comportant pour chaque ligne (L, L*) une borne d'entrée-sortie (B) reliée à une extrémité de ladite ligne (L, L*), une impédance d'adaptation (R) connectée à celle-ci et des moyens d'amplification (1) pour produire des signaux d'émission sur ladite borne (B) en réponse à des signaux de commande d'émission (e, e*) et pour produire des signaux de réception (s, s*) en réponse aux signaux d'émission produits sur ladite borne (B) par l'autre émetteur-récepteur, ledit procédé étant caractérisé en ce qu'il consiste à déconnecter dans ledit émetteur-récepteur l'impédance d'adaptation (R) de la borne (B) entre laquelle et un potentiel fixe Vdd elle était initialement branchée, à produire des signaux de commande d'émission (e, e*) et à les comparer aux signaux de réception fournis par lesdits moyens d'amplification (1).

3. Procédé de test d'un émetteur-récepteur relié par une liaison de transmission bidirectionnelle à un autre émetteur-récepteur analogue, ladite liaison étant constituée par au moins une ligne de transmission (L, L*), ledit émetteur-récepteur comportant pour chaque ligne (L, L*) une borne d'entrée-sortie (B) reliée à une extrémité de ladite ligne (L, L*), une impédance d'adaptation (R) connectée à celle-ci et des moyens d'amplification (1) pour produire des signaux d'émission sur ladite borne (B) en réponse à des signaux de commande d'émission (e, e*) et pour produire des signaux de réception (s, s*) en réponse aux signaux d'émission produits sur ladite borne (B) par l'autre émetteur-récepteur, ledit procédé étant caractérisé en ce qu'il consiste à déconnecter dans ledit autre émetteur-récepteur l'impédance d'adaptation (R) de la borne (B) entre laquelle et un potentiel fixe Vdd elle était initialement branchée, à produire des signaux de commande d'émission (e, e*) et à les comparer aux signaux de réception (s, s*) fournis par lesdits moyens d'amplification (1).

4. Procédé de test d'un circuit d'interface parallèle-série et série-parallèle comportant des moyens de sérialisation-désérialisation (14) ayant des entrées et sorties parallèles (DT) et des entrées et sorties série reliées à au moins un émetteur-récepteur (12), chacun desdits émetteurs-récepteurs étant prévus pour être reliés par une liaison de transmission bidirectionnelle à un autre émetteur-récepteur analogue, ladite liaison étant constituée par au moins une ligne de transmission (L, L*), ledit émetteur-récepteur comportant pour chaque ligne (L, L*) une borne d'entrée-sortie (B) prévue pour être reliée à une extrémité de ladite ligne (L,L*), une impédance d'adaptation (R) connectée à celle-ci et des moyens d'amplification (1) pour produire des signaux d'émission sur ladite borne (B) en réponse à des signaux de commande d'émission (e, e*) fournis à partir desdits moyens de sérialisation-désérialisation et pour produire des signaux de réception (s, s*) destinés auxdits moyens de sérialisation-désérialiation en réponse aux signaux d'émission produits sur ladite borne (B) par l'autre émetteur-récepteur, ledit procédé étant caractérisé en ce que, ladite impédance d'adaptation (R) étant branchée entre ladite borne (B) et un potentiel fixe (Vdd) et l'un au moins desdits émetteur-récepteurs n'étant pas relié à ladite liaison de transmission bidirectionnelle, il consiste à appliquer sur lesdites entrées parallèles des signaux d'émission de données impliquant un desdits émetteurs-récepteurs non reliés, et à comparer lesdits signaux d'émission de données aux signaux présents sur lesdites sorties parallèles (DT).

5. Procédé de test d'un circuit d'interface parallèle-série, série-parallèle, comportant des moyens de sérialisation-désérialisation (14) ayant des entrées et sorties parallèles (DT) et des entrées et sorties série reliées à au moins un émetteur-récepteur (12), l'un au moins desdits émetteurs-récepteurs étant reliés par une liaison de transmission bidirectionnelle à un autre émetteur-récepteur analogue, ladite liaison étant constituée par au moins une ligne de transmission (L, L*), ledit émetteur-récepteur comportant pour chaque ligne (L, L*) une borne d'entrée-sortie (B) reliée à une extrémité de ladite ligne (L,L*), une impédance d'adaptation (R) connectée à celle-ci et des moyens d'amplification (1) pour produire des signaux d'émission sur ladite borne (B) en réponse à des signaux de commande d'émission (e, e*) fournis à partir desdits moyens de sérialisation-désérialisation et pour produire des signaux de réception (s, s*) destinés auxdits moyens de sérialisation-désérialisation en réponse aux signaux d'émission produits sur ladite borne (B) par l'autre émetteur-récepteur, ledit procédé étant caractérisé en ce qu'il consiste à déconnecter l'impédance d'adaptation de la borne (B) entre laquelle et un potentiel fixe (Vdd) elle était initialement branchée, dans au moins un desdits émetteurs-récepteurs, et à appliquer sur lesdites entrées parallèles des signaux d'émission de données impliquant un desdits émetteurs-récepteurs reliés dont les impédances d'adaptation sont déconnectées et à comparer lesdits signaux d'émission de données aux signaux présents sur lesdites sorties parallèles.

6. Procédé de test d'un circuit d'interface parallèle-série, série-parallèle, comportant des moyens de sérialisation-désérialisation (14) ayant des entrées et sorties parallèles (DT) et des entrées et sorties série reliées à au moins un émetteur-récepteur (12), l'un au moins desdits émetteurs-récepteurs étant reliés par une liaison de transmission bidirectionnelle à un autre émetteur-récepteur de même constitution, ladite liaison étant constituée par au moins une ligne de transmission (L, L*), ledit émetteur-récepteur comportant pour chaque ligne (L, L*) une borne d'entrée-sortie (B) reliée à une extrémité de ladite ligne (L,L*), une impédance d'adaptation (R) connectée à celle-ci et des moyens d'amplification (1) pour produire des signaux d'émission sur ladite borne (B) en réponse à des signaux de commande d'émission (e, e*) fournis à partir desdits moyens de sérialisation-désérialisation et pour produire des signaux de réception (s, s*) destinés auxdits moyens de sérialisation-désérialisation en réponse aux signaux d'émission produits sur ladite borne (B) par l'autre émetteur-récepteur, ledit procédé étant caractérisé en ce qu'il consiste à déconnecter l'impédance d'adaptation (R) de la borne (B) entre laquelle et un potentiel fixe (Vdd) elle était initialement branchée, dans au moins un desdits autres émetteurs-récepteurs, à appliquer sur lesdites entrées parallèles des signaux d'émission de données destinés à l'un desdits autres émetteurs-récepteurs et à comparer lesdits signaux d'émission de données aux signaux présents sur lesdites sorties parallèles (DT).

7. Circuit émetteur-récepteur relié par une liaison de transmission bidirectionnelle à un autre émetteur-récepteur analogue, ladite liaison étant constituée par au moins une ligne de transmission (L, L*), ledit circuit émetteur-récepteur comportant pour chaque ligne (L, L*) une borne d'entrée-sortie (B) reliée à une extrémité de ladite ligne (L,L*), une impédance d'adaptation (R) connectée à celle-ci et des moyens d'amplification (1) pour produire des signaux d'émission sur ladite borne (B) en réponse à des signaux de commande d'émission (e, e*) et pour produire des signaux de réception (s, s*) en réponse aux signaux d'émission produits sur ladite borne (B) par l'autre émetteur-récepteur, ledit circuit émetteur-recepteur étant caractérisé en ce que chaque impédance d'adaptation (R) est conçue de façon à pouvoir prendre une valeur infinie sous la commande d'un signal de test (INF) pour pouvoir effectuer une déconnexion des impédances d'adaptation (R).

8. Circuit selon la revendication 7, caractérisé en ce qu'il s'agit d'un circuit intégré (16) et en ce que la ou les impédances d'adaptation (R) sont elles-mêmes intégrées dans ledit circuit intégré.

9. Circuit d'interface parallèle-série et série-parallèle comportant des moyens de sérialisation-désérialisation (14) ayant des entrées et sorties parallèles (DT) et des entrées et sorties série reliées à au moins un émetteur-récepteur (12), chacun desdits émetteurs-récepteurs étant prévus pour être reliés par une liaison de transmission bidirectionnelle à un autre émetteur-récepteur analogue, ladite liaison étant constituée par au moins une ligne de transmission (L, L*), ledit émetteur-récepteur comportant pour chaque ligne (L, L*) une borne d'entrée-sortie (B) prévue pour être reliée à une extrémité de ladite ligne (L,L*), une impédance d'adaptation (R) connectée à celle-ci et des moyens d'amplification (1) pour produire des signaux d'émission sur ladite borne (B) en réponse à des signaux de commande d'émission (e, e*) fournis à partir desdits moyens de sérialisation-désérialisation et pour produire des signaux de réception (s, s*) destinés auxdits moyens de sérialisation-désérialiation en réponse aux signaux d'émission produits sur ladite borne (B) par l'autre émetteur-récepteur, caractérisé en ce qu'il comporte un générateur de signaux de test relié auxdites entrées parallèles (DT), des moyens pour comparer lesdits signaux de test aux signaux présents sur lesdites sorties parallèles (DT) et des moyens pour mémoriser les résultats des comparaisons effectuées par lesdits moyens de comparaison.

10. Circuit selon la revendication 9, caractérisé en ce que lesdits moyens de sérialisation étant synchronisés par un signal d'horloge d'émission fourni par un générateur (13) et lesdits moyens de désérialisation étant synchronisés par un signal d'horloge régénéré à partir des signaux série reçus, ledit générateur de signaux de test est un premier générateur de signaux aléatoires synchronisé par ledit signal d'horloge d'émission et en ce que lesdits moyens de comparaison comportent un second générateur de signaux aléatoires identique au premier et synchronisé par lesdits signaux d'horloge régénérés.

11. Circuit selon la revendication 7, caractérisé en ce qu'il est relié aux entrées et aux sorties série de moyens de sérialisation-désérialisation (14) ayant des entrées et sorties parallèles (DT) pour constituer un circuit d'interface parallèle-série générant les signaux de commande d'émission (e, e*) et recevant les signaux de réception (s, s*).

**Patentansprüche**

1. Prüfverfahren für einen Sender-Empfänger, der dazu vorgesehen ist, über eine bidirektionale Übertragungsverbindung mit einem anderen, analogen Sender-Empfänger verbunden zu werden, wobei die Verbindung durch wenigstens eine Übertragungsleitung (L, L*) gebildet ist, wobei der Sender-Empfänger für jede Leitung (L, L*) einen Eingangs-Ausgangs-Anschluß (B), der dazu vorgesehen ist, mit einem Ende der Leitung (L, L*) verbunden zu werden, eine Anpassungsimpedanz (R), die mit diesem verbunden ist, sowie Verstärkungsmittel (1) enthält, um als Antwort auf Sendesteuersignale (e, e*) am Anschluß (B) Sendesignale zu erzeugen und um als Antwort auf die vom anderen Sender-Empfänger am Anschluß (B) erzeugten Sendesignale Empfangssignale (s, s*) zu erzeugen, wobei das Verfahren dadurch gekennzeichnet ist, daß es dann, wenn die Anpassungsimpedanz (R) zwischen den Anschluß (B) und ein festes Potential (Vdd) geschaltet ist und wenn der Sender-Empfänger nicht mit der bidirektionalen Übertragungsverbindung verbunden ist, darin besteht, Sendesteuersignale (e, e*) zu erzeugen und sie mit den Empfangssignalen (s, s*) zu vergleichen, die von den Verstärkungsmitteln (1) geliefert werden.

**2.** Prüfverfahren für einen Sender-Empfänger, der über eine bidirektionale Übertragungsverbindung mit einem anderen, analogen Sender-Empfänger verbunden ist, wobei die Verbindung durch wenigstens eine Übertragungsleitung (L, L*) gebildet ist, wobei der Sender-Empfänger für jede Leitung (L, L*) einen Eingangs-Ausgangs-Anschluß (B), der mit einem Ende der Leitung (L, L*) verbunden ist, eine Anpassungsimpedanz (R), die mit diesem verbunden ist, sowie Verstärkungsmittel (1) enthält, um als Antwort auf Sendesteuersignale (e, e*) am Anschluß (B) Sendesignale zu erzeugen und um als Antwort auf die vom anderen Sender-Empfänger am Anschluß (B) erzeugten Sendesignale Empfangssignale (s, s*) zu erzeugen, wobei das Verfahren dadurch gekennzeichnet ist, daß es darin besteht, im Sender-Empfänger die Anpassungsimpedanz (R), die anfangs zwischen den Anschluß (B) und ein festes Potential Vdd geschaltet war, von diesem zu trennen, Sendesteuersignale (e, e*) zu erzeugen sowie diese mit den Empfangssignalen zu vergleichen, die von den Verstärkungsmitteln (1) geliefert werden.

**3.** Prüfverfahren für einen Sender-Empfänger, der über eine bidirektionale Übertragungsverbindung mit einem anderen, analogen Sender-Empfänger verbunden ist, wobei die Verbindung durch wenigstens eine Übertragungsleitung (L, L*) gebildet ist, wobei der Sender-Empfänger für jede Leitung (L, L*) einen Eingangs-Ausgangs-Anschluß (B), der mit einem Ende der Leitung (L, L*) verbunden ist, eine Anpassungsimpedanz (R), die mit diesem verbunden ist, sowie Verstärkungsmittel (1) enthält, um als Antwort auf Sendesteuersignale (e, e*) am Anschluß (B) Sendesignale zu erzeugen und um als Antwort auf die vom anderen Sender-Empfänger am Anschluß (B) erzeugten Sendesignale Empfangssignale (s, s*) zu erzeugen, wobei das Verfahren dadurch gekennzeichnet ist, daß es darin besteht, in dem anderen Sender-Empfänger die Anpassungsimpedanz (R), die anfangs zwischen den Anschluß (B) und ein festes Potential Vdd geschaltet war, von diesem zu trennen, Sendesteuersignale (e, e*) zu erzeugen sowie diese mit Empfangssignalen (s, s*) zu vergleichen, die von den Verstärkungsmitteln (1) geliefert werden.

**4.** Prüfverfahren für eine Parallel/seriell- und Seriell/parallel-Schnittstellenschaltung, die Serialisierungs- und Deserialisierungs-Mittel (14) enthält, die parallele Eingänge und Ausgänge (DT) sowie serielle Eingänge und Ausgänge, die mit wenigstens einem Sender-Empfänger (12) verbunden sind, enthält, wobei jeder der Sender-Empfänger dazu vorgesehen ist, über eine bidirektionale Übertragungsverbindung mit einem anderen, analogen Sender-Empfänger verbunden zu werden, wobei die Verbindung durch wenigstens eine Übertragungsleitung (L, L*) gebildet ist, wobei der Sender-Empfänger für jede Leitung (L, L*) einen Eingangs-Ausgangs-Anschluß (B), der dazu vorgesehen ist, mit einem Ende der Leitung (L, L*) verbunden zu werden, eine Anpassungsimpedanz (R), die an diesen angeschlossen ist, sowie Verstärkungsmittel (1) enthält, um als Antwort auf Sendesteuersignale (e, e*), die von den Serialisierungs- und Deserialisierungs-Mitteln geliefert werden, am Anschluß (B) Sendesignale zu erzeugen und um als Antwort auf die Sendesignale, die vom anderen Sender-Empfänger am Anschluß (B) erzeugt werden, Empfangssignale (s, s*) zu erzeugen, die für die Serialisierungs- und Deserialisierungs-Mittel bestimmt sind, wobei das Verfahren dadurch gekennzeichnet ist, daß es dann, wenn die Anpassungsimpedanz (R) zwischen den Anschluß (B) und ein festes Potential (Vdd) geschaltet ist und wenigstens einer der Sender-Empfänger nicht mit der bidirektionalen Übertragungsverbindung verbunden ist, darin besteht, an die parallelen Eingänge Daten-Sendesignale, die einen der nicht verbundenen Sender-Empfänger betreffen, anzulegen sowie die Daten-Sendesignale mit den an den parallelen Ausgängen (DT) vorhandenen Signalen zu vergleichen.

**5.** Prüfverfahren für eine Parallel/seriell- und Seriell/parallel-Schnittstellenschaltung, die Serialisierungs- und Deserialisierungs-Mittel (14) enthält, die parallele Eingänge und Ausgänge (DT) sowie serielle Eingänge und Ausgänge, die mit wenigstens einem Sender-Empfänger (12) verbunden sind, besitzen, wobei wenigstens einer der Sender-Empfänger über eine bidirektionale Übertragungsverbindung mit einem anderen, analogen Sender-Empfänger verbunden ist, wobei die Verbindung durch wenigstens eine Übertragungsleitung (L, L*) gebildet ist, wobei der Sender-Empfänger für jede Leitung (L, L*) einen Eingangs-Ausgangs-Anschluß (B), der mit einem Ende der Leitung (L, L*) verbunden ist, eine Anpassungsimpedanz (R), die mit diesem verbunden ist, sowie Verstärkungsmittel (1) enthält, um als Antwort auf Sendesteuersignale (e, e*), die von den Serialisierungs- und Deserialisierungs-Mitteln geliefert werden, am Anschluß (B) Sendesignale zu erzeugen und um als Antwort auf die Sendesignale, die vom anderen Sender-Empfänger am Anschluß (B) erzeugt werden, Empfangssignale (s, s*) zu erzeugen, die für die Serialisierungs- und Deserialisierungs-Mittel bestimmt sind, wobei das Verfahren dadurch gekennzeichnet ist, daß es darin besteht, in wenigstens einem der Sender-Empfänger die Anpassungsimpedanz, die anfangs zwischen den Anschluß (B) und ein festes Potential (Vdd) geschaltet war, von diesem zu trennen, sowie an die parallelen Eingänge Daten-Sendesignale, die einen der verbundenen Sender-Empfänger betreffen, deren Anpassungsimpedanzen getrennt sind, anzulegen und die Daten-Sendesignale mit den Signalen zu vergleichen, die an den parallelen Ausgängen vorhanden sind.

6. Prüfverfahren für eine Parallel/seriell- und Seriell/parallel-Schnittstellenschaltung, die Serialisierungs- und Deserialisierungs-Mittel (14) enthält, die parallele Eingänge und Ausgänge (DT) sowie serielle Eingänge und Ausgänge, die mit wenigstens einem Sender-Empfänger (12) verbunden sind, besitzen, wobei wenigstens einer der Sender-Empfänger über eine bidirektionale Übertragungsverbindung mit einem anderen Sender-Empfänger mit demselben Aufbau verbunden ist, wobei die Verbindung durch wenigstens eine Übertragungsleitung (L, L*) gebildet ist, wobei der Sender-Empfänger für jede Leitung (L, L*) einen Eingangs-Ausgangs-Anschluß (B), der mit einem Ende der Leitung (L, L*) verbunden ist, eine Anpassungsimpedanz (R), die mit diesem verbunden ist, sowie Verstärkungsmittel (1) enthält, um als Antwort auf Sendesteuersignale (e, e*), die von den Serialisierungs- und Deserialisierungs-Mitteln geliefert werden, am Anschluß (B) Sendesignale zu erzeugen und um als Antwort auf die Sendesignale, die vom anderen Sender-Empfänger am Anschluß (B) erzeugt werden, Empfangssignale (s, s*) zu erzeugen, die für die Serialisierungs- und Deserialisierungs-Mittel bestimmt sind, wobei das Verfahren dadurch gekennzeichnet ist, daß es darin besteht, in wenigstens einem der anderen Sender-Empfänger die Anpassungsimpedanz (R), die anfangs zwischen den Anschluß (B) und ein festes Potential Vdd geschaltet war, von diesem zu trennen, an die parallelen Eingänge Daten-Sendesignale anzulegen, die für einen der anderen Sender-Empfänger bestimmt sind, sowie die Daten-Sendesignale mit den Signalen zu vergleichen, die an den parallelen Ausgängen (DT) vorhanden sind.

7. Sender-Empfänger-Schaltung, die über eine bidirektionale Übertragungsverbindung mit einem anderen, analogen Sender-Empfänger verbunden ist, wobei die Verbindung durch wenigstens eine Übertragungsleitung (L, L*) gebildet ist, wobei die Sender-Empfänger-Schaltung für jede Leitung (L, L*) einen Eingangs-Ausgangs-Anschluß (B), der mit einem Ende der Leitung (L, L*) verbunden ist, eine Anpassungsimpedanz (R), die mit diesem verbunden ist, sowie Verstärkungsmittel (1) enthält, um als Antwort auf Sendesteuersignale (e, e*) am Anschluß (B) Sendesignale zu erzeugen und um als Antwort auf die von dem anderen Sender-Empfänger am Anschluß (B) erzeugte Sendesignale Empfangssignale (s, s*) zu erzeugen, wobei die Sender-Empfänger-Schaltung dadurch gekennzeichnet ist, daß jede Anpassungsimpedanz (R) so beschaffen ist, daß sie unter der Steuerung eines Prüfsignals (INF) einen unendlichen Wert annehmen kann, um eine Trennung der Anpassungsimpedanzen (R) vornehmen zu können.

8. Schaltung nach Anspruch 7, dadurch gekennzeichnet, daß es sich um eine integrierte Schaltung (16) handelt und daß die Anpassungsimpedanz(en) (R) ihrerseits in der integrierten Schaltung integriert ist (sind).

9. Parallel/seriell- und Seriell/parallel-Schnittstellenschaltung, die Serialisierungs- und Deserialisierungs-Mittel (14) enthält, die parallele Eingänge und Ausgänge (DT) und serielle Eingänge und Ausgänge, die mit wenigstens einem Sender-Empfänger (12) verbunden sind, besitzen, wobei jeder der Sender-Empfänger dazu vorgesehen ist, über eine bidirektionale Übertragungsverbindung mit einem anderen, analogen Sender-Empfänger verbunden zu werden, wobei die Verbindung durch wenigstens eine Übertragungsleitung (L, L*) gebildet ist, wobei der Sender-Empfänger für jede Leitung (L, L*) einen Eingangs-Ausgangs-Anschluß (B), der dazu vorgesehen ist, mit einem Ende der Leitung (L, L*) verbunden zu werden, eine Anpassungsimpedanz (R), die mit diesem verbunden ist sowie Verstärkungsmittel (1) enthält, um als Antwort auf Sendesteuersignale (e, e*), die von den Serialisierungs- und Deserialisierungs-Mitteln geliefert werden, am Anschluß (B) Sendesignale zu erzeugen und um als Antwort auf die vom anderen Sender-Empfänger am Anschluß (B) erzeugten Sendesignale Empfangssignale (s, s*) zu erzeugen, die für die Serialisierungsund Deserialisierungs-Mittel bestimmt sind, dadurch gekennzeichnet, daß sie einen Prüfsignal-Generator, der mit den parallelen Eingängen (DT), Mittel zum Vergleichen der Prüfsignale mit den an den parallelen Ausgängen (DT) vorhandenen Signalen sowie Mittel zum Speichern der Ergebnisse der von den Vergleichsmitteln ausgeführten Vergleiche enthält.

10. Schaltung nach Anspruch 9, dadurch gekennzeichnet, daß dann, wenn die Serialisierungsmittel durch ein von einem Generator (13) geliefertes Sendetaktsignal synchronisiert sind und die Deserialisierungsmittel durch ein Taktsignal, das anhand der empfangenen seriellen Signale rückgewonnen wird, synchronisiert sind, der Prüfsignalgenerator ein erster Generator für Zufallssignale ist, der durch das Sendetaktsignal synchronisiert ist, und daß die Vergleichsmittel einen zweiten Generator für Zufallssignale enthalten, der mit dem ersten völlig übereinstimmt und durch die rückgewonnenen Taktsignale synchronisiert ist.

11. Schaltung nach Anspruch 7, dadurch gekennzeichnet, daß sie mit den seriellen Eingängen und Ausgängen der Serialisierungs- und Deserialisierungs-Mittel (14) verbunden ist, die parallele Eingänge und Ausgänge (DT) besitzen, um eine Parallel/seriell-Schnittstellenschaltung zu bilden, die die Sendesteuersignale (e, e*) erzeugt und die Empfangssignale (s, s*) empfängt.

## Claims

1. A method for testing a transceiver provided so as to be linked by a bidirectional transmission link to another analogous transceiver, said link being constituted by at least one transmission line (L, L**), said transceiver comprising, for each line (L, L**), an input-output terminal (B) provided so as to be linked to one end of said line (L, L**), a matching impedance (R) connected to the latter and amplification means (1) for producing transmission signals at said terminal (B) in response to transmission control signals (e, e*) and for producing reception signals (s, s*) in response to the transmission signals produced at said terminal (B) by the other transceiver, said method being characterised in that, said matching impedance (R) being connected between said terminal (B) and a fixed potential (Vdd) and said transceiver not being linked to said bidirectional transmission link, it consists of producing transmission control signals (e, e*) and of comparing them with the reception signals (s, s*) supplied by said amplification means (1).

2. A method for testing a transceiver linked by a bidirectional transmission link to another analogous transceiver, said link being constituted by at least one transmission line (L, L**), said transceiver comprising, for each line (L, L**), an input-output terminal (B) linked to one end of said line (L, L**), a matching impedance (R) connected to the latter and amplification means (1) for producing transmission signals at said terminal (B) in response to transmission control signals (e, e*) and for producing reception signals (s, s*) in response to the transmission signals produced at said terminal (B) by the other transceiver, said method being characterised in that it consists of disconnecting, in said transceiver, the matching impedance (R) from the terminal (B) between which and a fixed potential Vdd it was initially connected, of producing transmission control signals (e, e*) and of comparing them with the reception signals supplied by said amplification means (1).

3. A method for testing a transceiver linked by a bidirectional transmission link to another analogous transceiver, said link being constituted by at least one transmission line (L, L*), said transceiver comprising, for each line (L, L*), an input-output terminal (B) linked to one end of said line (L, L*), a matching impedance (R) connected to the latter and amplification means (1) for producing transmission signals at said terminal (B) in response to transmission control signals (e, e*) and for producing reception signals (s, s*) in response to the transmission signals produced at said terminal (B) by the other transceiver, said method being characterised in that it consists of disconnecting, in said other transceiver, the matching impedance (R) from the terminal (B) between which and a fixed potential Vdd it was initially connected, of producing transmission control signals (e, e*) and of comparing them with the reception signals (s, s*) supplied by said amplification means (1).

4. A method for testing a parallel-serial and serial-parallel interface circuit comprising parallel-serial and serial-parallel conversion means (14) having parallel inputs and outputs (DT) and serial inputs and outputs linked to at least one transceiver (12), each of said transceivers being provided so as to be linked by a bidirectional transmission link to another analogous transceiver, said link being constituted by at least one transmission line (L, L*), said transceiver comprising, for each line (L, L*), an input-output terminal (B) provided so as to be linked to one end of said line (L, L*), a matching impedance (R) connected to the latter and amplification means (1) for producing transmission signals at said terminal (B) in response to transmission control signals (e, e*) supplied from said parallel-serial and serial-parallel conversion means and for producing reception signals (s, s*) going to said parallel-serial and serial-parallel conversion means in response to the transmission signals produced at said terminal (B) by the other transceiver, said method being characterised in that, said matching impedance (R) being connected between said terminal (B) and a fixed potential (Vdd) and at least one of said transceivers not being linked to said bidirectional transmission link, it consists of applying, to said parallel inputs, data transmission signals involving one of said linked transceivers and of comparing said data transmission signals with the reception signals present at said parallel outputs (DT).

5. A method for testing a parallel-serial, serial-parallel interface circuit comprising parallel-serial and serial-parallel conversion means (14) having parallel inputs and outputs (DT) and serial inputs and outputs linked to at least one transceiver (1 2), at least one of said transceivers being linked by a bidirectional transmission link to another analogous transceiver, said link being constituted by at least one transmission line (L, L*), said transceiver comprising, for each line (L, L*), an input-output terminal (B) linked to one end of said line (L, L*), a matching impedance (R) connected to the latter and amplification means (1) for producing transmission signals at said terminal (B) in response to transmission control signals (e, e*) supplied from said parallel-serial and serialparallel conversion means and for producing reception signals (s, s*) going to said parallel-serial and serial-parallel conversion means in response to the transmission signals produced at said terminal (B) by the other transceiver, said method being characterised in that it consists of disconnecting the matching impedance from the terminal (B) between which and a fixed potential (Vdd) it was initially connected, in at least one of said transceivers, and of applying, to said parallel inputs, data transmission signals involving one of said linked transceivers, the matching impedances of which are disconnected, and of comparing said data transmission signals with the signals present at said parallel outputs.

6. A method for testing a parallel-serial, serial-parallel interface circuit, comprising parallel-serial and serial-parallel conversion means (14) having parallel inputs and outputs (DT) and serial inputs and outputs linked to at least one transceiver (1 2), at least one of said transceivers being linked by a bidirectional transmission link to another transceiver constituted in the same way, said link being constituted by at least one transmission line (L, L*), said transceiver comprising, for each line (L, L*), an input-output terminal (B) linked to one end of said line (L, L*), a matching impedance (R) connected to the latter and amplification means (1) for producing transmission signals at said terminal (B) in response to transmission control signals (e, e*) supplied from said parallel-serial and serial-parallel conversion means and for producing reception signals (s, s*) going to said parallel-serial and serial-parallel conversion means in response to the transmission signals produced at said terminal (B) by the other transceiver, said method being characterised in that it consists of disconnecting the matching impedance (R) from the terminal (B) between which and a fixed potential (Vdd) it was initially connected, in at least one of said other transceivers, of applying, to said parallel inputs, data transmission signals going to one of said other transceivers and of comparing said data transmission signals with the signals present at said parallel outputs (DT).

7. A transceiver circuit linked by a bidirectional transmission link to another analogous transceiver, said link being constituted by at least one transmission line (L, L*), said transceiver circuit comprising, for each line (L, L*), an input-output terminal (B) linked to one end of said line (L, L*), a matching impedance (R) connected to the latter and amplification means (1) for producing transmission signals at said terminal (B) in response to transmission control signals (e, e*) and for producing reception signals (s, s*) in response to the transmission signals produced at said terminal (B) by the other transceiver, said transceiver circuit being characterised in that each matching impedance (R) is designed so as to be able to take an infinite value under the control of a test signal (INF) so as to be able to disconnect the matching impedances (R).

8. A circuit according to Claim 7, characterised in that it is an integrated circuit (16) and in that the matching impedance(s) (R) are themselves integrated into said integrated circuit.

9. A parallel-serial and serial-parallel interface circuit, comprising parallel-serial and serial-parallel conversion means (14) having parallel inputs and outputs (DT) and serial inputs and outputs linked to at least one transceiver (12), each of said transceivers being provided so as to be linked by a bidirectional transmission link to another analogous transceiver, said link being constituted by at least one transmission line (L, L*), said transceiver comprising, for each line (L, L*), an input-output terminal (B) provided so as to be linked to one end of said line (L, L*), a matching impedance (R) connected to the latter and amplification means (1) for producing transmission signals at said terminal (B) in response to transmission control signals (e, e*) supplied from said parallelserial and serial-parallel conversion means and for producing reception signals (s, s*) going to said parallel-serial and serial-parallel conversion means in response to the transmission signals produced at said terminal (B) by the other transceiver, characterised in that it comprises a test signal generator linked to said parallel inputs (DT), means for comparing said test signals with the signals present at said parallel outputs (DT) and means for storing the results of the comparisons performed by said comparison means.

10. A circuit according to Claim 9, characterised in that, said parallel-serial conversion means being synchronised by a transmission clock signal supplied by a generator (13) and said serial-parallel conversion means being synchronised by a regenerated clock signal from the serial signals received, said test signal generator is a first random signal generator synchronised by said transmission clock signal and in that said comparison means comprise a second random signal generator, identical to the first, and synchronised by said regenerated clock signals.

11. A circuit according to Claim 7, characterised in that it is linked to the serial inputs and outputs of parallel-serial and serial-parallel conversion means (14) having parallel inputs and outputs (DT) in order to constitute a parallel-serial interface circuit generating the transmission control signals (e, e*) and receiving the reception signals (s, s*).

FIG. 1

FIG. 2

# FIG. 3

FIG. 4

AI   AR   AUTO

1

e →        ← e*

V*          V

5

VAL      VAL*

4

Vdd

s*

s

T6        T7

T8        T9

Vref      T10

N3

Vss

FIG. 5

FIG. 6

FIG. 7

FIG. 8

FIG. 9

FIG. 10

FIG. 11

FIG. 12